(19) Europäisches Patentamt
European Patent Office
Office européen des brevets

(11) **EP 2 768 910 B1**

(12) **EUROPÄISCHE PATENTSCHRIFT**

(45) Veröffentlichungstag und Bekanntmachung des Hinweises auf die Patenterteilung:
**29.07.2020 Patentblatt 2020/31**

(21) Anmeldenummer: **12778963.4**

(22) Anmeldetag: **19.10.2012**

(51) Int Cl.:
***C09D 5/08*** (2006.01) ***C09D 5/12*** (2006.01)
***C09D 4/00*** (2006.01) ***B05D 7/14*** (2006.01)
***B05D 7/16*** (2006.01)

(86) Internationale Anmeldenummer:
**PCT/EP2012/004382**

(87) Internationale Veröffentlichungsnummer:
**WO 2013/056846 (25.04.2013 Gazette 2013/17)**

(54) **VERFAHREN ZUR HERSTELLUNG EINER KORROSIONSSCHUTZBESCHICHTUNG**

METHOD FOR PRODUCING AN ANTICORROSION COATING

PROCÉDÉ DE FABRICATION D’UN REVÊTEMENT DE PROTECTION ANTI-CORROSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2011 US 201161548762 P**
**19.10.2011 EP 11185839**

(43) Veröffentlichungstag der Anmeldung:
**27.08.2014 Patentblatt 2014/35**

(73) Patentinhaber:
- **BASF Coatings GmbH**
  **48165 Münster (DE)**
- **Université Blaise Pascal Clermont II**
  **63000 Clermont Ferrand (FR)**

(72) Erfinder:
- **HINTZE-BRÜNING, Horst**
  **48165 Münster (DE)**
- **KUES, Jan-Bernd**
  **48165 Münster (DE)**
- **SINNWELL, Sebastian**
  **40239 Düsseldorf (DE)**
- **WAPNER, Kristof**
  **40589 Düsseldorf (DE)**
- **LEROUX, Fabrice**
  **63670 Le Cendre (FR)**
- **STIMPFLING, Thomas**
  **63000 Clermont Ferrand (FR)**

(74) Vertreter: **BASF IP Association**
**BASF SE**
**GBI-C006**
**67056 Ludwigshafen (DE)**

(56) Entgegenhaltungen:
**EP-A2- 1 591 493**
**WO-A2-2005/003408**
**CN-A- 102 140 642**
**DE-A1-102007 054 241**
**DE-A1-102007 054 249**
**DE-A1-102009 021 069**
**DE-A1-102009 021 070**
**US-A1- 2006 266 438**

- **TROUTIER-THUILLIEZ A L ET AL: "Layered particle-based polymer composites for coatings: Part I. Evaluation of layered double hydroxides", PROGRESS IN ORGANIC COATINGS, ELSEVIER BV, NL, Bd. 64, Nr. 2-3, 1. Februar 2009 (2009-02-01), Seiten 182-192, XP025884317, ISSN: 0300-9440, DOI: 10.1016/J.PORGCOAT.2008.09.021 [gefunden am 2008-11-20]**
- **HINTZE-BRUENING H ET AL: "Layered particle-based polymer composites for coatings: Part II-Stone chip resistant automotive coatings", PROGRESS IN ORGANIC COATINGS, ELSEVIER BV, NL, Bd. 64, Nr. 2-3, 1. Februar 2009 (2009-02-01), Seiten 193-204, XP025884318, ISSN: 0300-9440, DOI: 10.1016/J.PORGCOAT.2008.09.020 [gefunden am 2008-11-22]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 768 910 B1

## Beschreibung

Die vorliegende Erfindung betrifft ein Verfahren zur Herstellung einer Korrosionsschutzbeschichtung, bei dem ein Korrosionsschutzgrundierungsmittel enthaltend ein organisches Polymer als Bindemittel und ein synthetisches, organische Anionen enthaltendes schichtförmiges Doppelhydroxid direkt auf ein metallisches Substrat aufgebracht wird und anschließend aus dem aufgebrachten Korrosionsschutzgrundierungsmittel ein Polymerfilm gebildet wird. Weiterhin betrifft die vorliegende Erfindung ein beschichtetes metallisches Substrat, welches nach dem genannten Verfahren beschichtet wurde. Ebenfalls betrifft die vorliegende Erfindung die Verwendung des Korrosionsschutzgrundierungsmittels zur Verbesserung der Korrosionsbeständigkeit metallischer Substrate.

## Stand der Technik

Die Korrosion metallischer Werkstoffe stellt ein heutzutage noch immer nicht zufriedenstellend gelöstes Problem dar. Durch die Korrosion, das heißt die in der Regel elektrochemische Reaktion eines metallischen Werkstoffs mit seiner atmosphärischen Umgebung, insbesondere Sauerstoff und Wasser, kommt es zu signifikanten Veränderungen des Werkstoffs. Korrosionsschäden führen zur Beeinträchtigung der Funktion metallischer Bauteile und letztlich zur Notwendigkeit von Reparatur oder Austausch der Bauteile. Die entsprechende wirtschaftliche Bedeutung der Korrosion beziehungsweise des Schutzes vor Korrosion ist demnach hoch relevant.

Dem Korrosionsschutz ist demnach in beinahe allen Bereichen der Metallindustrie (beispielsweise Maschinenbau und Ausrüstung, Automobilindustrie (Fahrzeugbau), Luft- und Raumfahrtindustrie, Schiffbauindustrie, Elektroindustrie, Feinmechanikindustrie), insbesondere aber in den Bereichen der Automobil- und der Luftfahrtindustrie, eine hohe Wichtigkeit beizumessen. Gerade in den letztgenannten Bereichen werden als Bauteile größtenteils metallische Substrate eingesetzt, die teils extremen atmosphärischen Bedingungen ausgesetzt sind.

Typischerweise werden metallische Substrate im Rahmen der Fahrzeuglackierung und Luftfahrtindustrie einem aufwendigen mehrschichtigen Beschichtungsverfahren unterworfen. Dies ist notwendig, um den hohen Anforderungen der Fahrzeugbauindustrie und Luftfahrtindustrie, beispielsweise einem guten Korrosionsschutz, gerecht werden zu können.

Gängigerweise erfolgt zunächst im Rahmen der Vorbehandlung des metallischen Substrats der Aufbau einer korrosionsschützenden Konversionbeschichtung. Zu nennen sind dabei beispielsweise die Phosphatierung von Stahlsubstraten oder eine Chromatierung von Aluminiumsubstraten bzw. Aluminiumlegierungen, beispielsweise speziellen Aluminiumkupferlegierungen wie der AA2024-T3 Legierung. Letztere findet aufgrund ihrer sehr guten Verarbeitbarkeit, seiner geringen Dichte und gleichzeitig widerstandsfähigen Beschaffenheit gegen physische Beanspruchung hauptsächlich Anwendung im Bereich der Luftfahrtindustrie. Gleichzeitig neigt das Material jedoch zu der gefährlichen Fadenkorrosion ("Filiform Corrosion"), bei der sich - oftmals nach physischer Beschädigung der Substratbeschichtung und gleichzeitig hoher Luftfeuchtigkeit - die Korrosion fadenförmig unter der Beschichtung des Substrats fortpflanzt und dabei fadenförmige Korrosionsschäden des metallischen Substrats hervorruft. Entsprechend wichtig ist ein guter Korrosionsschutz.

Nach der Vorbehandlung und dem Aufbau entsprechender Konversionsschichten erfolgt grundsätzlich die Herstellung einer korrosionsschützenden Grundierungsschicht. Diese basiert auf einer organisch-polymeren Matrix und kann zudem die weiter unten beschriebenen Korrosionsschutzpigmente enthalten. Im Rahmen der Automobilindustrie handelte es sich dabei in der Regel um eine Elektrotauchlackierung, insbesondere eine kathodische Elektrotauchlackierung (KTL). In der Flugzeugindustrie werden meist spezielle epoxidharzbasierende Grundierungen eingesetzt. Im Bereich der Automobillackierung folgt dann in der Regel die Herstellung einer Füllerlackierung, die beispielsweise noch vorhandene Unebenheiten des Substrats ausgleichen und die KTL gegenüber Steinschlagschäden schützen soll. Im letzen Schritt folgt schließlich die Decklackierung, die insbesondere bei der Automobillackierung aus zwei separat aufgebrachten Schichten, einer Basislack- und einer Klarlackschicht, besteht.

Eine effektive und auch heutzutage nach wie vor wichtige Form des Korrosionsschutzes metallischer Substrate ist der Einsatz von Chromaten. Beispielsweise werden Chromate beim Aufbau von Konversionsschichten im Rahmen der Oberflächenvorbehandlung von metallischen Substraten eingesetzt (Chromatierung). Ebenfalls häufig werden Chromate als so genannte Korrosionsschutzpigmente direkt in Korrosionsschutzgrundierungsmitteln, die auf organisch-polymeren Harzen basieren, eingesetzt. Bei diesen Grundierungsmitteln handelt es sich also um Beschichtungsstoffe beziehungsweise Lacke, die neben bekannten Lackkomponenten wie organischen Harzen als Bindemittel zusätzlich bestimmte Chromate in Form von Chromatsalzen (z. B. Barium-, Zink-, Strontiumchromat) enthalten.

Die korrosionsschützende Wirkung von Chromaten, beispielsweise im Rahmen des Aufbaus von Konversionsschichten durch das Ätzen der metallischen Oberfläche (beispielsweise Aluminium) und die dann folgende anteilige Reduktion des Chromats zum 3-wertigen Chrom sowie den Aufbau schwerlöslicher, gemischter Aluminium(III)/Chrom(III)/Chrom(VI)-Oxidhydrate als Passivierungsschichten, ist seit langem bekannt.

Problematisch sind jedoch die hoch toxische und cancerogene Wirkung der Chromate und die damit einhergehende Belastung von Mensch und Umwelt. Die Vermeidung von Chromaten in der Fahrzeugindustrie bei gleichzeitiger Beibehaltung eines angemessenen Korrosionsschutzes liegt daher seit Langem im Bestreben der entsprechenden Industriezweige.

Ein möglicher Ansatz zur Vermeidung von Chromaten bei gleichzeitigem Erhalt eines angemessenen Korrosionsschutzes ist beispielsweise der Einsatz von Oxoanionen (beziehungsweise deren Salze) verschiedener Übergangsmetalle wie beispielsweise $MoO_4^{2-}$, $MnO_4^-$ und $VO_3^-$. Auch der Einsatz von Lanthanoid-Kationen oder unterschiedlichen organischen Spezies wie beispielsweise Benzotriazolen, Ethylendiamintetraessigsäure (EDTA), Quinolin-Derivaten oder Phosphatderivaten ist bekannt. Die zugrunde liegenden Wirkungsmechanismen sind komplex und auch heute noch nicht vollständig verstanden. Sie reichen von der Bildung passivierender Oxid-/Hydroxidschichten auf der korrodierenden Metalloberfläche bis hin zur Komplexierung bestimmter Metallkationen (beispielsweise Cu(II)) und der damit einhergehender Unterdrückung spezieller Korrosionsarten (beispielsweise der Fadenkorrosion von Aluminiumkupferlegierungen).

Ein weiterer Ansatz besteht in der Verwendung so genannter Nanocontainer- und/oder Schichtstruktur-Materialien wie beispielsweise organischen Cyclodextrinen oder anorganischen Materialien wie Zeolithen, Tonerden-Nanoröhren und Smektiten. Verwendet werden auch Hydrotalkit-Komponenten beziehungsweise schichtförmige Doppelhydroxid-Materialien. Letztere werden in der allgemeinen Fachliteratur meist mit dem feststehenden englischen Begriff "layered double hydroxide" beziehungsweise der entsprechenden Abkürzung "LDH" bezeichnet. Sie werden in der Literatur häufig durch die idealisierte allgemeine Formel $[M2^{2+}{}_{(1-x)}M3^{3+}{}_x(OH)_2]^{x+}\ [A^{y-}{}_{(x/y)}\cdot nH_2O]$ oder ähnliche Summenformeln beschrieben. Darin steht M2 für zweiwertige metallische Kationen, M3 für dreiwertige metallische Kationen und A für Anionen der Valenz x. Bei den natürlich vorkommenden LDH handelt es sich hierbei in der Regel um anorganische Anionen wie Karbonat, Chlorid, Nitrat, Hydroxid, und/oder Bromid. Auch verschiedene weitere anorganische sowie organische Anionen können insbesondere in synthetischen, weiter unten beschriebenen LDH vorhanden sein. Zudem wird in obiger allgemeiner Formel das vorhandene Kristallwasser berücksichtigt. Bei den Hydrotalkiten ist als zweiwertiges Kation $Mg^{2+}$, als dreiwertiges Kation $Al^{3+}$ und als Anion Karbonat vorhanden, wobei letzteres durch Hydroxidionen oder andere anorganische und auch organische Anionen zumindest anteilig substituiert sein kann. Dies gilt insbesondere für die synthetischen Hydrotalkite. Die Hydrotalkite können also als spezielle Form der allgemein als LDH bekannten Schichtstrukturen bezeichnet werden. Die Hydrotalkite beziehungsweise LDH haben eine schichtartige Struktur ähnlich dem Brucit ($Mg(OH)_2$), wobei jeweils zwischen zwei, aufgrund der anteilig vorhandenen dreiwertigen Metallkationen positiv geladenen Metallhydroxidschichten eine negativ geladene Schicht von interkalierten Anionen liegt, welche in der Regel zusätzlich Kristallwasser enthält. Es handelt sich also um alternierend positiv und negativ geladene Schichten, die durch entsprechende ionische Wechselwirkungen eine Schichtstruktur ausbilden. Die LDH-Schichtstruktur findet in der oben gezeigten Formel durch die entsprechend gesetzten Klammern Berücksichtigung.

Zwischen zwei benachbarte Metallhydroxidschichten können unterschiedliche Agenzien, beispielsweise die oben genannten Korrosionsschutzagenzien, durch nicht-kovalente, ionische und/oder polare Wechselwirkungen eingelagert werden. So werden bei den Hydrotalkiten beziehungsweise LDH Korrosionsschutzagenzien in anionischer Form in die anionischen Schichten eingelagert. Sie werden direkt in entsprechende Beschichtungsmittel auf Basis polymerer Bindemittel (beispielsweise Grundierungsmittel) eingearbeitet und tragen somit zum Korrosionsschutz bei. Dabei unterstützen sie die korrosionsschützenden Konversionschichten. Versucht wird auch, die Konversionsschichten ganz zu ersetzen, wobei dann die entsprechenden Grundierungen direkt auf das Metall aufgetragen werden. Auf diese Weise wird das Beschichtungsverfahren weniger aufwendig und damit kostengünstiger gestaltet.

Die WO 03/102085 beschreibt synthetische Hydrotalkit-Komponenten beziehungsweise schichtförmige Doppelhydroxide (LDH) enthaltend austauschbare Anionen und deren Einsatz in Beschichtungsmitteln zur Verbesserung des Korrosionsschutzes von Aluminiumoberflächen. Die schichtförmigen Doppelhydroxide werden dabei durch die bereits weiter oben angegebene, idealisierte allgemeine Formel $[M2^{2+}{}_{(1-x)}M3^{3+}{}_x(OH)_2]^{x+}\ [A^{x-}\cdot nH_2O]$ beschrieben. Als Metallkationen sind die Hydrotalkit-Kationen Magnesium(II) und Aluminium(III) bevorzugt. Als Anionen werden beispielsweise Nitrat, Karbonat oder Molybdat aber auch die chromhaltigen Anionen Chromat und Dichromat beschrieben, wobei das toxische, cancerogene Chromat den besten Korrosionsschutz aufweist.

Weitere Hydrotalkit-Komponenten beziehungsweise LDH und deren Einsatz als Korrosionsschutzmittel in Beschichtungsmitteln auf Basis organischer polymerer Bindemittel werden beispielsweise in EP 0282619 A1, WO 2005/003408 A2 oder ECS Transactions, 24 (1) 67-76 (2010) beschrieben. Dabei kommen neben den schon beschriebenen anorganischen Anionen beispielsweise auch organische Anionen wie Salicylat, Oxalat, DMTD (2,4-dimercapto-1,3,4-thiadiazol) und dessen Derivate, aus EDTA erhältliche Anionen oder Benzotriazolat zum Einsatz.

WO 2005/003408 A2 offenbart die Verwendung von (DMTD)- oder TMT-Hydrotalkiten als Korrosionsinhibitoren für metallische Substraten und deren Einsatz als Korrosionsschutzmittel in Beschichtungsmitteln auf Basis organischer polymerer Bindemittel.

CN 102 140 642 A beschreibt die Verwendung von Benzoat-Hydrotalkit als Korrosionsinhibitor für den Kohlenstoffstahl.

Trotz der oben beschriebenen Ansätze konnte das Problem der Korrosion bis heute nicht zufrieden stellend

gelöst werden. Dies hat zur Folge, dass bis heute nach wie vor chromhaltige Verbindungen in großem Umfang als Korrosionsschutzmittel eingesetzt werden müssen, um einen angemessenen Korrosionsschutz zu garantieren.

Die WO 2009/062621 A1, DE 10 2007 054241 A1 und DE 10 2007 054249 A1 beschreiben ebenfalls den Einsatz von LDH in Beschichtungsmitteln für die Herstellung steinschlagfester OEM-Schichtverbunde im Rahmen der Automobillackierung. Bekanntermaßen bestehen solche OEM-Schichtverbunde aus einer Korrosionsschutzlackierung (insbesondere KTL), einer Füllerschicht, einer Basislackschicht und einer abschließenden Klarlackschicht. Die LDH werden in der Füllerschicht eingesetzt. Die Füllerschicht soll dabei neben einer hohen Steinschlagbeständigkeit eine gute Haftung zur darunter liegenden KTL und der darüber liegenden Basislackschicht und zudem gute Füllereigenschaften (Abdeckung der Struktur des Substrats) aufweisen. Der Einsatz von LDH-Komponenten als Korrosionsinhibitoren wird nicht beschrieben. Auch eine Applikation der LDH-Komponenten enthaltenden Beschichtungsmittel direkt auf das Substrat wird nicht beschrieben. Als organische Anionen kommen beispielsweise m- oder p-Aminobenzolsulfonat, m- oder p-Hydroxybenzolsulfonat, m- oder p-Aminobenzoat und/oder m- oder p-Hydroxybenzoat zum Einsatz.

**Aufgabe der vorliegenden Erfindung**

Trotz der zahlreichen Ansätze zur Herstellung von Beschichtungen metallischer Substrate mit angemessener Korrosionsschutzwirkung bei gleichzeitiger Vermeidung von chromhaltigen Korrosionsschutzmitteln, wird die zugrunde liegende Problematik bis heute nicht zufrieden stellend gelöst. Dies hat zur Folge, dass den chromhaltigen Korrosionsschutzmitteln nach wie vor eine entscheidende Rolle für den Aufbau korrosionsschützender Beschichtungen metallischer Substrate zukommt. Als erst recht schwierig gestaltet sich ein angemessener Korrosionsschutz dann, wenn beispielsweise versucht wird, auf entsprechende Konversionsschichten zu verzichten und die entsprechende Grundierung direkt auf das metallische Substrat aufzubringen, um dadurch den Beschichtungsprozess kostengünstiger und zeitsparender zu gestalten.

Aufgabe der vorliegenden Erfindung war es demzufolge, einen guten Korrosionsschutz metallischer Substrate zu gewährleisten und dabei auf chromhaltige Korrosionsschutzmittel verzichten zu können. Weiterhin sollte der zugrunde liegende Beschichtungsprozess möglichst einfach sein. So sollte die resultierende Beschichtung auf einer möglichst geringen Anzahl verschiedener Einzelschichten beruhen. Es sollte zudem möglich sein, auf entsprechende Konversionsschichten verzichten zu können und trotzdem einen ausgezeichneten Korrosionsschutz zu erhalten. Auf diese Weise sollte es insbesondere möglich sein, in den hinsichtlich des Korrosionsschutzes anspruchsvollen Gebieten der Automobilindustrie (Fahrzeugbau) und der Luftfahrtindustrie die Vorteile eine guten Korrosionsschutzes mit einem ökonomisch vorteilhaften Beschichtungsprozess zu kombinieren.

**Erfindungsgemäße Lösung**

Erfindungsgemäß konnten die Aufgaben gelöst werden durch ein Verfahren zur Herstellung einer Korrosionsschutzbeschichtung, bei dem

(1) ein Korrosionsschutzgrundierungsmittel enthaltend

(A) mindestens ein organisches Polymer als Bindemittel, wobei es sich nicht um ein anionisch stabilisiertes Polymer handelt und
(B) mindestens ein synthetisches, organische Anionen enthaltendes schichtförmiges Doppelhydroxid

direkt auf ein metallisches Substrat aufgebracht wird und
(2) aus dem in Stufe (1) aufgebrachten Korrosionsschutzgrundierungsmittel ein Polymerfilm gebildet wird,

wobei das Verfahren dadurch gekennzeichnet ist, dass
das mindestens eine synthetische schichtförmige Doppelhydroxid (B) mindestens ein organisches Anion der folgenden Formel (I) umfasst:

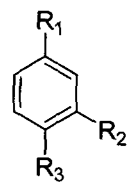

(I)

mit

$R_1 = COO^-, SO_3^-$;
$R_2/R_3 = NH_2, OH, H$.

Gegenstand der vorliegenden Erfindung ist zudem ein beschichtetes metallisches Substrat, welches nach dem genannten Verfahren beschichtet wurde.

Ebenfalls betrifft die vorliegende Erfindung die Verwendung des Korrosionsschutzgrundierungsmittels und damit der darin enthaltenen synthetischen, organische Anionen enthaltenden LDH zur Verbesserung der Korrosionsbeständigkeit metallischer Substrate.

Durch das erfindungsgemäße Verfahren wird ein ausgezeichneter Korrosionsschutz metallischer Substrate gewährleistet, wobei zudem auf chromhaltige Korrosionsschutzmittel verzichtet werden kann. Gleichzeitig ist es möglich, auf Konversionsschichten zu verzichten und trotzdem einen ausgezeichneten Korrosionsschutz zu erhalten. Die Vorteile eines guten Korrosionsschutzes werden also mit einem ökonomisch vorteilhaften Beschichtungsprozess kombiniert. Das Verfahren ist damit in den hinsichtlich des Korrosionsschutzes anspruchsvollen Gebieten der Automobilindustrie (Fahrzeugbau) und der Luftfahrtindustrie anwendbar.

## Ausführliche Beschreibung der Erfindung

Das in dem erfindungsgemäßen Verfahren einzusetzende Korrosionsschutzgrundierungsmittel enthält mindestens ein wie weiter unten beschriebenes organisches Polymer (A) als Bindemittel. Bekanntermaßen werden als Bindemittel organische Verbindungen in Beschichtungsstoffen bezeichnet, die für die Filmbildung verantwortlich sind. Sie stellen den nichtflüchtigen Anteil des Beschichtungsstoffes ohne Pigmente und Füllstoffe dar. Aus dem Korrosionsschutzgrundierungsmittel wird also nach der Applikation auf ein Substrat ein Polymerfilm gebildet, sodass die gebildete Beschichtungsschicht auf einer organischen Polymermatrix basiert.

Das in dem erfindungsgemäßen Verfahren einzusetzende Korrosionsschutzgrundierungsmittel ist beispielsweise physikalisch, thermisch oder aktinisch härtbar. Zu diesem Zweck enthält es dann mindestens ein wie weiter unten beschriebenes organisches Polymer (A) als Bindemittel welches beispielsweise physikalisch, thermisch oder mit aktinischer Strahlung härtbar ist. Bevorzugt ist das Korrosionsschutzgrundierungsmittel physikalisch oder thermisch härtbar. Das Korrosionsschutzgrundierungsmittel kann, beispielsweise sofern es thermisch härtbar ist, selbst- und/oder fremdvernetzend sein. Bevorzugt ist es fremdvernetzend. Das einzusetzende Korrosionsschutzgrundierungsmittel kann auch thermisch und aktinisch härtbar sein. Dies bedeutet beispielsweise, dass das organische Polymer (A) sowohl thermisch als auch aktinisch härtbar ist. Möglich ist dann natürlich auch die gleichzeitige oder aufeinander folgende Anwendung beider Härtungsmethoden, das heißt die dual-cure-Härtung.

Im Rahmen der vorliegenden Erfindung bedeutet "physikalisch härtbar" beziehungsweise der Begriff "physikalische Härtung" die Bildung eines Films durch Abgabe von Lösemittel aus Polymerlösungen oder Polymerdispersionen.

Im Rahmen der vorliegenden Erfindung bedeutet "thermisch härtbar" beziehungsweise der Begriff "thermische Härtung" die durch chemische Reaktion von reaktiven funktionellen Gruppen initiierte Vernetzung einer Lackschicht (Bildung eines Beschichtungsfilms), wobei die energetische Aktivierung dieser chemischen Reaktion durch thermische Energie möglich ist. Dabei können unterschiedliche funktionelle Gruppen, die zueinander komplementär sind, miteinander reagieren (komplementäre funktionelle Gruppen) und/oder die Filmbildung beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeile 24, bekannt.

Bei dieser Vernetzung kann es sich um eine Selbstvernetzung und/oder eine Fremdvernetzung handeln. Sind beispielsweise die komplementären reaktiven funktionellen Gruppen bereits in den als Bindemittel eingesetzten organischen Polymeren (A) vorhanden, liegt eine Selbstvernetzung vor. Eine Fremdvernetzung liegt beispielsweise vor, wenn ein organisches Polymer (A) enthaltend bestimmte funktionelle Gruppen mit einem wie weiter unten beschriebenen Vernetzungsmittel reagiert, wobei dann das Vernetzungsmittel reaktive funktionelle Gruppen enthält, die zu den in dem eingesetzten organischen Polymer (A) vorhandenen reaktiven funktionellen Gruppen komplementär sind.

Es ist auch möglich, dass ein organisches Polymer (A) als Bindemittel sowohl selbstvernetzende als auch fremdvernetzende funktionelle Gruppen aufweist und dann mit Vernetzungsmitteln kombiniert wird.

Im Rahmen der vorliegenden Erfindung ist unter "aktinisch härtbar" beziehungsweise dem Begriff "aktinische Härtung" die Tatsache zu verstehen, dass die Härtung unter Anwendung aktinischer Strahlung, nämlich elektromagnetischer Strahlung wie nahes Infrarot (NIR) und UV-Strahlung, insbesondere UV-Strahlung, sowie Korpuskularstrahlung wie Elektronenstrahlung zur Härtung möglich ist. Die Härtung durch UV-Strahlung wird üblicherweise durch radikalische oder kationische Photoinitiatoren initiiert. Typische aktinisch härtbare funktionelle Gruppen sind Kohlenstoff-Kohlenstoff-Doppelbindungen, wobei hierbei in der Regel radikalische Photoinitiatoren zum Einsatz kommen. Auch epoxidgruppenhaltige Systeme können aktinisch gehärtet werden, wobei dann die Härtung in der Regel durch kationische Photoinitiatoren initiiert wird und die so aktivierten Epoxidgruppen mit den typischen, auch weiter unten beschriebenen Vernetzungsmittel für epoxidgruppenhaltige Systeme umgesetzt werden können. Der aktinischen Härtung liegt also ebenfalls eine chemische Vernetzung zugrunde, wobei die energetische Aktivierung dieser chemischen Reaktion durch aktinische Strahlung bewirkt wird.

Der erste Bestandteil des Korrosionsschutzgrundierungsmittels, das im Rahmen des erfindungsgemäßen Verfahrens einzusetzen ist, ist mindestens ein organisches Polymer (A) als Bindemittel. Bekanntermaßen handelt es sich bei organischen Polymeren um Mischungen von verschieden großen Molekülen, wobei sich diese Moleküle durch eine Abfolge von gleichen oder verschiedenen organischen Monomereinheiten (als reagierte Form von organischen Monomeren) auszeichnen. Während einem bestimmten organischen Monomer eine diskrete Molekülmasse zuzuordnen ist, ist ein Polymer also immer eine Mischung von Molekülen, die sich in ihrer Molekülmasse unterscheiden. Ein Polymer kann daher nicht durch eine diskrete Molekülmasse beschrieben werden, sondern ihm werden bekanntermaßen immer mittlere Molekülmassen, nämlich eine zahlenmittlere ($M_n$) und eine gewichtsmittlere ($M_w$) Molekülmasse, zugeordnet. Bekanntermaßen müssen die beschriebenen Eigenschaften definitionsgemäß immer zu der Beziehung $M_w$ größer $M_n$ führen beziehungsweise die Polydispersität ($M_w/M_n$) ist immer größer 1. Es handelt sich also beispielsweise um die an sich bekannten Polyadditions-, Polykondensations- und/oder Polymerisationsharze. Beispielhaft seien Polyvinylacetal-, Acryl-, Epoxid-, Polyurethan-, Polyester, Polyamid- und Polyetherharze genannt. Die Polymere können beispielsweise die oben genannten funktionellen Gruppen zur komplementären und/oder autoreaktiven Vernetzung enthalten.

Der Anteil des mindestens einen organischen Polymers (A) als Bindemittel an dem Korrosionsschutzgrundierungsmittel beträgt vorzugsweise 20 bis 90 Gew.-%, besonders bevorzugt 30 bis 70 Gew.-% und insbesondere bevorzugt 40 bis 60 Gew.-%, jeweils bezogen auf den Festkörper des Korrosionsschutzgrundierungsmittels.

Zur Bestimmung des Festkörpers wird im Rahmen der vorliegenden Erfindung eine Menge von 1 g des jeweiligen Bestandteils, beispielsweise einer Dispersion eines Polymers in entsprechenden Lösemitteln oder des gesamten Korrosionsschutzgrundierungsmittels, für 1 h bei 125°C erhitzt, auf Raumtemperatur abgekühlt und dann zurückgewogen.

Im Falle eines thermisch härtbaren, fremdvernetzenden Korrosionsschutzgrundierungsmittels wird neben den oben beschriebenen Polymeren (A) als Bindemittel in der Regel zusätzlich mindestens ein Vernetzungsmittel eingesetzt. Bei den Vernetzungsmitteln handelt sich beispielsweise um die dem Fachmann bekannten, weiter unten beschriebenen Polyamine oder auch blockierte und/oder freie Polyisocyanate wie beispielsweise Hexamethylendiisocyanat, Isophorondiisocyanat, deren Isocyanurat-Trimerisate, sowie teilweise oder vollständig alkylierte Melaminharze.

Die Auswahl und Kombination von geeigneten organischen Polymeren (A) als Bindemittel und gegebenenfalls Vernetzungsmitteln erfolgt je nach den gewünschten und/oder erforderlichen Eigenschaften des herzustellenden Beschichtungssystems. Ein weiteres Auswahlkriterium sind die gewünschten und/oder erforderlichen Härtungsbedingungen, insbesondere die Härtungstemperaturen. Wie eine solche Auswahl zu treffen ist, ist dem Fachmann auf dem Gebiet bekannt und kann von diesem entsprechend angepasst werden. Es ist allerdings von Vorteil, wenn als organische Polymere (A) keine anionisch stabilisierten Polymere eingesetzt werden. Anionisch stabilisierte Polymere sind bekanntermaßen solche Polymere, die mit anionischen Gruppen und/oder funktionellen Gruppen, die durch Neutralisationsmittel in Anionen überführt werden können, modifiziert sind (beispielsweise Carboxylatgruppen und/oder Carbonsäuregruppen) und dadurch in Wasser dispergiert werden können. Solche Polymere können dann in wässrigen Zusammensetzungen, beispielsweise wässrigen Beschichtungszusammensetzungen, eingesetzt werden. Es hat sich im Rahmen der vorliegenden Erfindung gezeigt, dass der Einsatz solcher anionisch stabilisierten Polymere (A) nachteilig sein kann, da hierdurch gegebenenfalls ein anteiliger Austausch von in den weiter unten beschriebenen LDH befindlichen organischen Anionen gegen die Polymermoleküle stattfinden kann. Das erfindungsgemäße Korrosionsschutzgrundierungsmittel ist also frei von anionisch stabilisierten Polymeren.

Möglich sind dabei die an sich bekannten Einkomponenten-(1K)- und Mehrkomponentensysteme, insbesondere Zweikomponenten-(2K)-systeme.

In Einkomponenten(1K)-Systemen liegen die zu vernetzenden Komponenten, beispielsweise die organischen Polymere (A) als Bindemittel und die Vernetzungsmittel, nebeneinander, das heißt in einer Komponente, vor. Voraussetzung hierfür ist, dass die zu vernetzenden Komponenten erst bei höheren Temperaturen und/oder bei Bestrahlen mit aktinischer Strahlung miteinander vernetzen.

In Zweikomponenten(2K)-Systemen liegen die zu vernetzenden Komponenten, beispielsweise die organischen Polymere (A) als Bindemittel und die Vernetzungsmittel, getrennt voneinander in mindestens zwei Komponenten vor, die erst kurz vor der Applikation zusammengegeben werden. Diese Form wird dann gewählt, wenn die zu vernetzenden Komponenten bereits bei Raumtemperatur miteinander reagieren. Bevorzugt sind (2K)-Systeme.

Bevorzugt enthält das Korrosionsschutzgrundierungsmittel mindestens ein Polyvinylbutyralharz und/oder Epoxidharz als organisches Polymer (A), ganz besonders bevorzugt ist mindestens ein Epoxidharz.

Als Polyvinylbutyrale beziehungsweise Polyvinylbutyralharz werden bekanntermaßen Polymere bezeichnet, die aus Polyvinylalkoholen durch Acetalisierung mit Butanal hergestellt werden. Sie gehören demnach zur Gruppe der Polyvinylacetale. Die zur Herstellung der Polyvinylbutyrale benötigten Polyvinylalkohole werden durch radikalische Polymerisation von Vinylacetat zum Polyvinylacetat und anschließende alkalische Verseifung hergestellt. Die dann eigentliche Herstellung der Polyvinylbutyrale erfolgt in der Regel durch die Umsetzung der Polyvinylalkohole mit Butanal in

Gegenwart saurer Katalysatoren. Dabei ist aus statistischen beziehungsweise sterischen Gründen maximal eine Funktionalisierung von etwa 80% erreichbar. Da wie oben beschrieben die zur Herstellung der Polyvinylbutyrale einzusetzenden Polyvinylalkohole grundsätzlich durch Verseifung von Polyvinylacetat hergestellt werden und auch hierbei kein vollständiger Umsatz zu erwarten ist, enthalten die Polyvinylbutyrale in der Regel zumindest einen geringen Anteil an Acetylgruppen (mindestens ca. 2%). Die Polyvinylbutyrale werden bevorzugt als Lösungen beziehungsweise Dispersionen in organischen Lösemitteln wie beispielsweise Alkoholen, Ethern, Estern, Ketonen oder Chlorkohlenwasserstoffen beziehungsweise Gemischen hiervon in dem erfindungsgemäßen Korrosionsschutzgrundierungsmittel eingesetzt. Die Harze können beispielsweise in physikalisch härtenden Korrosionsschutzgrundierungsmitteln als Alleinbindemittel verwendet oder in Kombination mit beispielsweise Phenol- oder Aminoharzen eingesetzt werden. Kenngrößen der Polyvinylbutyrale sind beispielsweise der Anteil an Acetalgruppen (beziehungsweise der Restanteil freier, nicht umgesetzter Hydroxylgruppen) oder der Anteil an (nicht verseiften) Acetylgruppen im Polymer. Im Rahmen der vorliegenden Erfindung können letztlich alle der dem Fachmann an sich bekannten Polyvinylbutyrale eingesetzt werden. Bevorzugt werden allerdings Polyvinylbutyrale mit einem Acetalisierungsgrad zwischen 20 und 60 %, besonders bevorzugt, mit einem Acetalisierungsgrad zwischen 30 und 45 % eingesetzt (gemessen beispielsweise nach GOST-Norm: GOST 9439 RU). Solche Polyvinylbutyrale können beispielsweise unter der Handelsbezeichnung Mowital von der Firma Kuraray, unter der Handelsbezeichnung Pioloform von der Firma Wacker oder unter der Handelsbezeichnung Butvar der Firma Butvar erhalten werden.

Bei den ebenfalls bevorzugten Epoxidharzen als organische Polymere (A) im erfindungsgemäßen Korrosionsschutzgrundierungsmittel handelt es sich um die an sich bekannten Polykondensationsharze, die im Grundmolekül mehr als eine EpoxidGruppe enthalten. Bevorzugt handelt es sich dabei um durch Kondensation von Bisphenol A oder Bisphenol F mit Epichlorhydrin hergestellte Epoxidharze. Diese Verbindungen enthalten entlang der Kette Hydroxygruppen und an den Enden Epoxidgruppen. Je nach Kettenlänge der Epoxidharze ändert sich die Fähigkeit zur Vernetzung über die Epoxid-Gruppen beziehungsweise über die Hydroxygruppen. Während mit steigender Kettenlänge beziehungsweise Molmasse die Fähigkeit zur Vernetzung über die Epoxid-Gruppen sinkt, steigt die Vernetzungsfähigkeit über die Hydroxygruppen mit wachsender Kettenlänge. Im Rahmen der vorliegenden Erfindung können letztlich alle der dem Fachmann an sich bekannten Epoxidharze eingesetzt werden, beispielsweise die weiter unten genannten und im Handel erhältlichen Epoxidharze, die als Lösung beziehungsweise Dispersion in organischen Lösemitteln oder Wasser erhalten werden können. Allerdings ist es aus den bereits oben genannten Gründen von Vorteil, keine anionisch stabilisierten Epoxidharze zu verwenden.

Die im Rahmen der vorliegenden Erfindung bevorzugt einzusetzenden Epoxidharze weisen bevorzugt einen Epoxidgruppengehalt von 800 bis 7000 mmol Epoxidgruppen pro kg Harz (mmol/kg), insbesondere bevorzugt von 3500 bis 6000 mmol/kg auf. Der Gehalt an Epoxidgruppen pro kg Harz wird dabei im Rahmen der vorliegenden Erfindung gemäß DIN EN ISO 3001 bestimmt.

Solche Epoxidharze können, beispielsweise als Lösung beziehungsweise Dispersion in organischen Lösemitteln oder Wasser, beispielsweise unter der Handelsbezeichnung Beckopox von der Firma Cytec oder unter der Handelsbezeichnung Epikote von der Firma Momentive erhalten werden.

Da die Epoxidharze in der Regel allein keine filmbildenden Eigenschaften aufweisen, werden im Falle ihres Einsatzes zusätzlich entsprechende Epoxidharz-Vernetzungsmittel eingesetzt. Insbesondere bevorzugt werden im Rahmen der vorliegenden Erfindung die bereits oben genannten Polyamine als Vernetzungsmittel beziehungsweise Epoxidharz-Vernetzungsmittel eingesetzt. "Polyamine" ist bekanntlich eine Sammelbezeichnung für organische Verbindungen mit 2 oder mehr Aminogruppen, beispielsweise Diamine oder Triamine. Neben den Aminogruppen weisen die Verbindungen dann beispielsweise ein aliphatisches oder aromatisches Grundgerüst auf, das heißt sie bestehen beispielsweise aus Aminogruppen und aliphatischen Gruppen beziehungsweise aus Aminogruppen und aromatischen Gruppen (aliphatische oder aromatische Polyamine). Natürlich können die Polyamine auch aliphatische und aromatische Einheiten sowie gegebenenfalls weitere funktionelle Gruppen enthalten. Beispiele für aliphatische Polyamine sind Diethylentriamin, Triethylentetramin, 3,3,5-Trimethylhexamethylendiamin, 1,2-Cyclohexyldiamin und Isophorondiamin. Beispiele für aromatische Amine sind Methylendianilin und 4,4'-Diaminodiphenylsulfon. Ebenfalls unter den Oberbegriff "Polyamine" fallen organische Verbindungen, die beispielsweise aus einem wie oben beschriebenen aliphatischen oder aromatischen Polyamin (als so genanntes Basispolyamin) durch Umsetzung zumindest eines Teils seiner Aminogruppen mit weiteren organischen Verbindungen hergestellt werden, um dadurch verschiedene Eigenschaften wie die Reaktivität und/oder die Löslichkeit der Verbindungen zu beeinflussen und/oder auch Einfluss auf die Eigenschaften der aus der entsprechenden Beschichtungszusammensetzung hergestellten Beschichtung (beispielsweise Oberflächenhärte) zu nehmen. Solche Verbindungen stellen also Addukte dar und können, sofern sie nach wie vor mindestens 2 Aminogruppen enthalten, als Polyaminaddukte oder modifizierte Polyamine bezeichnet werden. Sie weisen naturgemäß auch ein höheres Molekulargewicht als die oben genannten Polyamine auf, sodass ihre gesundheitsschädigende Wirkung herabgesetzt ist.

Häufig stellen solche Polyaminaddukte Umsetzungsprodukte von aliphatischen und/oder aromatischen Polyaminen mit Polyepoxiden, beispielsweise den oben beschriebenen Epoxidharzen oder auch diskreten difunktionellen

Verbindungen wie Bisphenol-A-diglycidyether, dar, wobei dann ein stöchiometrischer Überschuss an Aminogruppen im Vergleich zu den Epoxidgruppen eingesetzt wird. Diese Addukte werden dann zur Härtung der Epoxidharze in der eigentlichen Beschichtungszusammensetzung eingesetzt. Ein bekanntes Beispiel ist das Umsetzungsprodukt von 3,3,5-Trimethylhexamethylendiamin als Basispolyamin mit Bisphenol-A-diglycidyether als Epoxidharz. Ebenfalls unter den Oberbegriff der "Polyamine" fallen beispielsweise die an sich bekannten Polyaminoamide, das heißt Polymere, die beispielsweise durch Kondensation von wie oben beschriebenen Polyaminen als Basispolyamin und Polycarbonsäuren, insbesondere Dicarbonsäuren, hergestellt werden.

Die im Rahmen der vorliegenden Erfindung bevorzugt einzusetzenden Polyamine als Vernetzungsmittel weisen eine H-aktiv-Äquivalentmasse (Masse Polyamin pro mol aktivem Wasserstoff (N-H-Gruppen), das heißt Wasserstoff an primären und sekundären Aminogruppen) von 15 bis 330 g Polyamin pro mol aktivem Wasserstoff, insbesondere bevorzugt von 35 bis 330 g/mol, ganz besonders bevorzugt von 150 bis 250 g/mol auf (gemessen über die Bestimmung primärer und sekundärer Amingruppen gemäß ASTM D2073).

Solche Polyamine beziehungsweise Polyaminaddukte oder auch Polyaminoamide als Reaktionspartner beziehungsweise Vernetzungsmittel von Epoxidharzen können beispielsweise unter der Handelsbezeichnung Beckopox von der Firma Cytec oder auch unter der Handelsbezeichnung Cardolite (beispielsweise Cardolite NC-562) von der Firma Cardolite erhalten werden.

Ganz besonders bevorzugt wird im Rahmen der vorliegenden Erfindung mindestens ein Epoxidharz als organisches Harz (A) in Kombination mit mindestens einem Polyamin als Vernetzungsmittel eingesetzt.

Dabei wird der Anteil der Polyamine an dem Korrosionsschutzgrundierungsmittel vorzugsweise so gewählt, dass das Verhältnis der komplementären reaktiven funktionellen Gruppen des mindestens einen Polyamins (das heißt also vernetzbarer N-H-Gruppen aus primären und sekundären Aminogruppen) zu den Epoxidgruppen des mindestens einen Epoxidharzes (A) zwischen 0,4 und 1,4, besonders bevorzugt zwischen 0,6 und 1,0, ganz besonders bevorzugt zwischen 0,7 und 0,9 liegt (Bestimmung Epoxidgruppengehalt und H-aktiv-Äquivalentmasse siehe oben).

Das erfindungsgemäße Korrosionsschutzgrundierungsmittel enthält zudem mindestens ein synthetisches, organische Anionen enthaltendes schichtförmiges Doppelhydroxid (B). Jedes LDH enthält mindestens eine Art organischer Anionen der folgenden Formel (I):

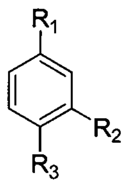

(I)

mit

$R_1$ = $COO^-$, $SO_3^-$;
$R_2$/ $R_3$ = $NH_2$, OH, H.

Es ist erfindungsgemäß bevorzugt, wenn $R_2 = R_3 = H$ ausgeschlossen ist. Demzufolge sind besonders bevorzugte Kombinationen von $R_1/R_2/R_3$ also $COO^-$ /$NH_2$/$NH_2$, $COO^-$/$NH_2$/OH, $COO^-$/$NH_2$/H, $COO^-$/OH/$NH_2$, $COO^-$/OH/OH, $COO^-$/OH/H, $COO^-$/H/$NH_2$, $COO^-$/H/OH, $SO_3^-$/$NH_2$/$NH_2$, $SO_3^-$/$NH_2$/OH, $SO_3^-$/$NH_2$/H, $SO_3^-$ /OH/$NH_2$, $SO_3^-$/OH/OH, $SO_3^-$/OH/H, $SO_3^-$/H/$NH_2$, $SO_3^-$/H/OH. Die diesen Kombinationen zugrunde liegenden organischen Anionen führen zu einer ganz besonders guten Korrosionsbeständigkeit der Korrosionsschutzgrundierungsmittel. Unter den Anionen der Formel (I) sind insbesondere die hiervon umfassten Anilinsulfonate, nämlich das p-Anilinsulfonat und das m-Anilinsulfonat, sowie das 3,4-Dihydroxybenzoat, bevorzugt. Ganz besonders bevorzugt ist m-Anilinsulfonat. In einer weiteren Ausführungsform der Erfindung wird ganz besonders bevorzugt 3,4-Dihydroxybenzoat eingesetzt.

Die organischen Anionen der Formel (I) sind also insbesondere erhältlich durch Deprotonierung der Carboxy- oder Sulfonsäuregruppe der korrespondierenden Säuren. Eine solche Deprotonierung erfolgt im Rahmen der vorliegenden Erfindung bevorzugt durch Erhöhung des pH-Werts einer wässrigen Lösung oder Suspension der jeweiligen Verbindung. Insbesondere wird die Deprotonierung im Rahmen der weiter unten angeführten Herstellung der LDH (B) durchgeführt.

Die Verbindungen der Formel (I) beziehungsweise die jeweiligen korrespondierenden Säuren können auch Aminogruppen enthalten. Diese Aminogruppen können bekanntermaßen basisch, das heißt als Protonenakzeptor reagieren und damit einen kationischen Charakter hervorrufen. Durch die jeweils vorhandene Carboxy- oder Sulfonsäuregruppe und die gegebenenfalls vorhandene(n) Aminogruppe(n) kann je nach pH-Wert beispielsweise auch ein zwitterionischer Charakter resultieren. Auch in diesem Zusammenhang kann also eine Erhöhung des pH-Werts notwendig sein, um die jeweiligen Säuren vollständig in Anionen der Formel (I) zu überführen. Dabei ist allerdings zu beachten,

dass die Basenstärke der Aminogruppe(n) durch das Phenylgrundgerüst und die damit verbundene Delokalisierung des freien Elektronenpaares am Stickstoff der Aminogruppen(n) im Vergleich zu aliphatischen Aminen herabgesetzt ist. Beispielhaft sei auf die $pK_b$-Werte von reinem Anilin (9,4) und Aminoethan (3,4) verwiesen. Dies bedeutet, dass die gegebenenfalls vorhandenen Aminogruppen bereits im neutralen oder schwach alkalischen Bereich vollständig deprotoniert sind und dadurch ein rein anionischer Molekülcharakter hervorgerufen werden kann.

LDH können durch die folgende allgemeine Formel (II) beschrieben werden:

$$[M^{2+}_{(1-x)}\,M^{3+}_{x}(OH)_2][A^{y-}_{(x/y)}]\cdot nH_2O \qquad (II)$$

wobei $M^{2+}$ für zweiwertige metallische Kationen, $M^{3+}$ für dreiwertige metallische Kationen und $A^{y-}$ für Anionen der mittleren Valenz y steht. Unter mittlerer Valenz ist im Rahmen der vorliegenden Erfindung der Mittelwert der Valenz der gegebenenfalls unterschiedlichen eingelagerten Anionen zu verstehen. Wie dem Fachmann leicht ersichtlich ist, können unterschiedliche Anionen, die in ihrer Valenz unterschiedlich sind (beispielsweise Karbonat, Nitrat, aus EDTA erhältliche Anion etc.) je nach ihrem jeweiligen Anteil an der Gesamtmenge von Anionen (Gewichtungsfaktor) zu einer jeweils individuellen mittleren Valenz beitragen. Für x sind Werte von 0,05 bis 0,5 bekannt, während der Anteil an Kristallwasser mit Werten von *n* = 0 bis 10 sehr unterschiedlich sein kann. Dabei befinden sich die zwei- und dreiwertigen Metallkationen sowie Hydroxidionen in regelmäßiger Anordnung kantenverknüpfter Oktaeder in den positiv geladenen Metallhydroxidschichten (erster Klammerausdruck in Formel (II)) sowie die interkalierten Anionen in den jeweiligen negativ geladenen Zwischenschichten (zweiter Klammerausdruck in Formel (II)), wobei zusätzlich Kristallwasser enthalten sein kann.

Die im Rahmen der vorliegenden Erfindung vorteilhaft einzusetzenden LDH werden beschrieben durch die Formel (II):

$$[M^{2+}_{(1-x)}\,M^{3+}_{x}(OH)_2][A^{y-}_{(y/y)}]\cdot nH_2O \qquad (II)$$

wobei

die zweiwertigen metallischen Kationen $M^{2+}$ ausgewählt werden aus der Gruppe bestehend aus $Zn^{2+}$, $Mg^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$ und Mischungen davon, bevorzugt $Zn^{2+}$, $Mg^{2+}$, $Ca^{2+}$ und Mischungen davon, ganz besonders bevorzugt $Zn^{2+}$ und/oder $Mg^{2+}$, insbesondere $Zn^{2+}$,

die dreiwertigen metallischen Kationen $M^{3+}$ ausgewählt werden aus der Gruppe bestehend aus $Al^{3+}$, $Bi^{3+}$, $Fe^{3+}$, $Cr^{3+}$, $Ga^{3+}$, $Ni^{3+}$, $Co^{3+}$, $Mn^{3+}$, $V^{3+}$, $Ce^{3+}$, $La^{3+}$ und Mischungen davon, bevorzugt $Al^{3+}$, $Bi^{3+}$ und/oder $Fe^{3+}$, insbesondere $Al^{3+}$,

die Anionen $A^{y-}$ zumindest anteilig mindestens ein organisches Anion der folgenden Formel (I) umfassen:

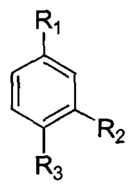

(I)

mit

$R_1 = COO^-, SO_3^-$,

$R_2/R_3 = NH_2$, OH, H, wobei insbesondere $R_2 = R_3 = H$ ausgeschlossen ist,

x einen Wert von 0,05 bis 0,5, insbesondere 0,15 bis 0,4, ganz besonders bevorzugt von 0,25 bis 0,35 und

n einen Wert von 0 bis 10 einnimmt.

Die Herstellung von LDH kann nach an sich bekannten Verfahren, wie sie beispielsweise in E. Kanezaki, Preparation of Layered Double Hydroxides in Interface Science and Technology, Vol. 1, Chapter 12, Page 345 ff. - Elsevier, 2004, ISBN 0-12-088439-9 beschrieben sind, erfolgen. Weitere Informationen über die Synthese von LDH sind beispielsweise in D.G. Evans et. al., "Preparation of Layered Double Hydroxides", Struct Bond (2006) 119, pages 89-119 [DOI 10.1007/430_006, Springer Berlin Heidelberg 2005] beschrieben.

Grundsätzlich kann die Herstellung von LDH aus Mischungen von anorganischen Salzen der metallischen Kationen unter Einhaltung der erforderlichen und/oder gewünschten Verhältnisse (Stöchiometrien) von zweiwertigen und dreiwertigen metallischen Kationen in wässriger Phase bei definierten, konstant gehaltenen basischen pH-Werten erfolgen. Erfolgt die Synthese in Gegenwart von Kohlendioxid, beispielsweise unter atmosphärischen Bedingungen und/oder durch Zugabe von Karbonaten, enthalten die LDH in der Regel Karbonat als interkaliertes Anion. Grund hierfür

ist, dass das Karbonat eine hohe Affinität zur Einlagerung in die Schichtstruktur der LDH aufweist. Sofern unter Ausschluss von Kohlendioxid und Karbonaten (beispielsweise Stickstoff- oder Argon-Schutzgasatmosphäre, nicht Karbonathaltige Salze) gearbeitet wird, enthalten die LDH die anorganischen Anionen der Metallsalze, beispielsweise Chloridionen, als interkalierte Anionen.

Die Synthese kann auch unter Ausschluss von Kohlendioxid (Schutzgasatmosphäre) beziehungsweise Karbonat und in Anwesenheit von beispielsweise organischen Anionen oder deren saurer Vorstufen, welche nicht als Anion in den Metallsalzen vorhanden sind, durchgeführt werden. Dabei erhält man in der Regel ein gemischtes Hydroxid, welches die entsprechenden organischen Anionen interkaliert hat.

Durch die oben genannte Methode, die so genannte direkte Kopräzipitationsmethode (direct coprecipitation method), erhält man also in einer Ein-Schritt-Synthese die gewünschten LDH.

Im Rahmen der vorliegenden Erfindung hat sich gezeigt, dass der Einsatz der direkten Kopräzipitationsmethode als besonders vorteilhaft anzusehen ist. Von Vorteil ist es dabei, wenn man unter Schutzgasatmosphäre die Metallsalze zu einer vorlegten wässrigen, basischen Lösung der erfindungsgemäß zu interkalierenden organischen Anionen der Formel (I) tropft und dabei durch kontrollierte Zugabe einer Base, beispielsweise Natronlauge, den pH-Wert konstant hält. Um eine kontrollierte und effektive Kristallisation zu erreichen, werden die Metallsalzlösungen vorteilhaft langsam, das heißt je nach Konzentrationen und Mengen der zuzutropfenden und vorzugelegenden Lösungen, innerhalb von etwa 1 bis 10 Stunden, insbesondere 2 bis 5 Stunden, zugetropft. Nach vollständigem Zutropfen erfolgt dann vorteilhafterweise eine Alterung beziehungsweise ein weiteres Rühren der Suspension von etwa 1 Stunde bis zu 10 Tagen, insbesondere zwischen 2 und 24 Stunden, um einen möglichst vollständigen Umsatz zu gewährleisten. Die LDH werden dann nach Zentrifugation und mehrfacher Waschung mit Wasser in Form einer Aufschlämmung erhalten und können als solche in wasserbasierenden Korrosionsschutzgrundierungsmitteln eingesetzt werden. Nach entsprechender Trocknung bei Temperaturen beispielsweise zwischen 20°C und 40°C werden die LDH als Pulver erhalten und können dann in lösemittelbasierenden Korrosionsschutzgrundierungsmitteln eingesetzt werden.

Dabei wird im Rahmen der vorliegenden Erfindung vorteilhafterweise die zudosierte Menge von dreiwertigen Metallkationen so gewählt, dass ein Verhältnis organisches Anion/$M^{3+}$ zwischen 1:1 bis 10:1, insbesondere vorteilhaft zwischen 1:1 und 5:1, resultiert.

Der pH-Wert bei der Herstellung der LDH wird vorteilhaft zwischen 7 und 12 gewählt und dabei während der gesamten Synthese konstant gehalten. Je nach gewünschter Zusammensetzung (beispielsweise Wahl der metallischen Kationen $M^{2+}$/$M^{3+}$ und/oder organischen Anionen beziehungsweise der jeweiligen Ausgangsstoffe zur Erzeugung dieser Komponenten) ergibt sich in der Regel ein optimaler pH-Wert, der vom Fachmann auf einfache Weise angepasst werden kann. Beispielhaft sei auf die Basizität des jeweiligen organischen Anions beziehungsweise die Acidität der korrespondierenden Säure verwiesen. Für die ganz besonders bevorzugten LHD umfassend $Zn^{2+}$ und $Al^{3+}$ als metallische Kationen und m-Anilinsulfonat als organisches Anion ist der pH-Wert insbesondere zwischen 8 und 11, ganz besonders bevorzugt zwischen 8,5 und 9,5 zu wählen und selbstverständlich ebenfalls während der gesamten Synthese konstant zu halten.

Ebenfalls vorteilhaft eingesetzt wird im Rahmen der vorliegenden Erfindung die so genannte anionische Austauschreaktionsmethode (anionic exchange reaction method). Hierbei wird die Eigenschaft der LDH, interkalierte Anionen austauschen zu können, ausgenutzt. Die Schichtstruktur der kationischen gemischten Metallhydroxidschichten der LDH bleibt dabei erhalten. Zunächst werden bereits hergestellte LDH, beispielsweise nach der Kopräzipitationsmethode unter Schutzgasatmosphäre hergestellte LDH, welche im Vergleich zum Karbonat gut austauschbare Anionen wie Chlorid oder Nitrat enthalten, in wässriger alkalischer Lösung unter Schutzgasatmosphäre suspendiert. Anschließend wird diese Suspension oder Aufschlämmung unter Schutzgasatmosphäre zu einer wässrigen alkalischen Lösung der zu interkalierenden organischen Anionen der Formel (I) gegeben und für eine gewisse Zeit, beispielsweise 1 Stunde bis 10 Tage, insbesondere 1 bis 5 Tage, gerührt. Die LDH werden dann wiederum nach Zentrifugation und mehrfacher Waschung mit Wasser in Form einer Aufschlämmung erhalten und können als solche in wasserbasierenden Korrosionsschutzgrundierungsmitteln eingesetzt werden. Nach entsprechender Trocknung bei Temperaturen beispielsweise zwischen 20°C und 40°C werden die LDH als Pulver erhalten und können dann in lösemittelbasierenden Korrosionsschutzgrundierungsmitteln eingesetzt werden.

Auch im Rahmen der anionischen Austauschreaktionsmethode ist es von Vorteil, die Menge an zu interkalierenden Anionen so zu wählen, dass das Verhältnis organisches Anion/$M^{3+}$ zwischen 1:1 bis 10:1, insbesondere vorteilhaft zwischen 1:1 und 5:1, liegt.

Der pH-Wert der Ionenaustauscherlösung beträgt wiederum vorteilhaft zwischen 7 und 12, beispielsweise je nach Acidität der konjugierten Säure des Anions und der Stabilität der Ausgangsphase an LDH. Für die ganz besonders bevorzugten LHD umfassend $Zn^{2+}$ und $Al^{3+}$ als metallische Kationen und m-Anilinsulfonat als organisches Anion ist der pH-Wert auch bei der Austauschreaktionsmethode insbesondere zwischen 8 und 11, ganz besonders bevorzugt zwischen 8,5 und 9,5 zu wählen und selbstverständlich ebenfalls während der gesamten Synthese konstant zu halten.

Alle oben genannten Reaktionsschritte erfolgen - soweit nicht anders angegeben - im Rahmen der vorliegenden Erfindung vorteilhaft zwischen 10°C und 80°C, insbesondere bei Raumtemperatur, das heißt zwischen etwa 15 und 25°C.

Ebenfalls möglich ist die Synthese von organische Anionen enthaltenden LDH durch die so genannte Rekonstruktionsmethode. Dabei werden beispielsweise bereits vorhandene LDH in Pulverform für einige Stunden auf einige hundert Grad Celsius erhitzt (beispielsweise 3 Stunden auf 450°C). Die LDH Struktur kollabiert und flüchtige und/oder thermisch zersetzbare interkalierten Anionen sowie das Kristallwasser können entweichen. Durch die extreme Behandlung zerfällt beispielsweise das Karbonat, wobei Kohlendioxid und Wasser entweichen. Zurück bleibt eine amorphe Mischung von Metalloxiden. Durch Zugabe von wässrigen Lösungen der zu interkalierenden Anionen unter Schutzgasatmosphäre wird die LDH Struktur wiederhergestellt und es entstehen die gewünschten LDH. Insbesondere wird diese Methode bei Einsatz von käuflich erworbenen LDH, die synthese- und lagerungsbedingt häufig das sehr affine, gut interkalierende Karbonat enthalten, eingesetzt.

Allerdings ist es von Vorteil im Rahmen der vorliegenden Erfindung die LDH durch die direkte Kopräzipitationsmethode und/oder die anionische Austauschreaktionsmethode, ganz besonders bevorzugt durch die direkte Kopräzipitationsmethode, herzustellen. Dabei kommen insbesondere Nitrat- und/oder Chloridsalze der jeweiligen Metallkationen zum Einsatz. Diese anorganischen Anionen lassen sich im Vergleich zum Karbonat gut austauschen und lassen damit die Herstellung von LDH mit hohem Anteil der gewünschten organischen Anionen zu. Insbesondere muss nicht, wie bei der Rekonstruktionsmethode, eine extreme thermische Behandlung erfolgen, um dadurch das LDH-affine Karbonat auszutreiben. Hinzu kommt, dass bei den erfindungsgemäß bevorzugten Methoden eine kontrollierte Ausbildung der LDH-Struktur durch langsame und steuerbare Zugabe der Metallsalzlösungen ermöglicht wird (direkte Kopräzipitationsmethode) beziehungsweise die LDH-Struktur während der Synthese erhalten bleibt (anionische Austauschreaktionsmethode). Keiner dieser Vorteile ist bei der Rekonstruktionsmethode gegeben, sodass die so hergestellten LDH häufige Fehlstellen in Ihrer Kristallstruktur aufweisen und die Methode lediglich beim $Mg^{2+}/Al^{3+}$-System zu angemessenen Ergebnissen führt, da lediglich dieses System die hierfür notwendige Befähigung zur thermodynamischen Selbstreorganisation unter den gegebenen Bedingungen aufweist.

Die im Rahmen der vorliegenden Erfindung hergestellten LDH können neben den organischen Anionen der Formel (I) synthese- und lagerungsbedingt bestimmte Mengen anorganischer Anionen, beispielsweise Karbonat, Chlorid und/oder Hydroxidionen, enthalten. Bevorzugt sind die organischen Anionen der Formel (I) aber in einem solchen Anteil vorhanden, dass durch diese Anionen die positive Schichtladung der Metallhydroxidschichten, erzeugt durch die dreiwertigen Metallkationen, zu mehr als 60 % kompensiert wird (Ladungskompensationsgrad von mehr als 60 %). Ganz besonders bevorzugt beträgt der Ladungskompensationsgrad mehr als 70 %, insbesondere mehr als 80 %. Die Bestimmung des Ladungskompensationsgrad erfolgt im Rahmen der vorliegenden Erfindung anhand von dem Fachmann an sich geläufigen quantitativen element- beziehungsweise elementaranalytischen Messtechniken. So lassen sich die Metallatome der LDH Schichten sowie schwerere Heteroatome wie insbesondere Schwefel (möglich ist auch Phosphor) über die Elementanalyse mittels ICP-OES (inductively coupled plasma optical emission spectroscopy) quantitativ bestimmen, während die Elementaranalyse für LDH Proben, deren organische Anionen nur die Elemente C/H/N/O umfassen, eine quantitative Bestimmung des Gehalts dieser Anionen ermöglicht. Für die ICP-OES wird eine wie oben beschrieben hergestellte LDH-Probe nach Waschung und Trocknung mit einer anorganischen Säure, beispielsweise Salpetersäure, versetzt und dadurch aufgeschlossen, während die Elementaranalyse nach der allgemein bekannten Verbrennungsmethode mit anschließender gaschromatischer Trennung und quantitativer Bestimmung (WLD) der Oxidations- bzw. Reduktionsprodukte durchgeführt wird. Aus den elementanalytisch bestimmten Gehalten der Metallatome sowie der schwereren Heteroatome (insbesondere Schwefel) der organischen Anionen (das heißt eines spezifischen, im Anion gebundenen schweren Heteroatoms, insbesondere Schwefel wie im Falle der Anilinsulfonate) werden die Mengen der dreiwertigen Metallkationen, insbesondere des $Al^{3+}$, sowie des jeweiligen organischen Anions bestimmt und über das Verhältnis dieser Mengen unter Berücksichtigung der entsprechenden Atom- beziehungsweise Molekulargewichte der Ladungskompensationsgrad ermittelt. Der theoretische Maximalwert von 100 % entspricht dabei einem Äquivalentverhältnis von positivem Ladungsequivalent des dreiwertigen Metallkations zu negativem Ladungsequivalent des organischen Anions der Formel (I) von eins.

Bei LDH Phasen, deren organische Anionen keine spezifischen, über die ICP-OES bestimmbaren Heteroatome enthalten, lassen die elementaranalytisch bestimmten Gehalte der Atome C, H, N und O unter Berücksichtigung der bekannten Summenformel des jeweiligen organischen Anions sowie des Gehalts an physisorbiertem Wasser (ermittelt aus dem Gewichtsverlust bis 150°C einer thermischen Gewichtsverlustanalyse, TGA) eine Berechnung des Gehalts dieser Anionen in der LDH-Probe zu.

Die bevorzugten Ladungskompensationsgrade der entsprechenden organischen Anionen lassen sich insbesondere durch den Einsatz der bevorzugten Herstellungsmethoden, nämlich der direkten Kopräzipitationsmethode und der anionischen Austauschreaktionsmethode, unter den oben beschriebenen bevorzugten Bedingungen (beispielsweise pH-Wert oder Verhältnis von organischem Anion zu dreiwertigem Metallkation) erreichen.

Die Hydrotalkit-Komponente (B), wird bevorzugt in einem Anteil von 0,1 bis 30 Gew.-%, insbesondere bevorzugt von 1 bis 20 Gew.-%, ganz besonders bevorzugt von 5 bis 15 Gew.-% und insbesondere bei 7,5 bis 12,5 Gew.-%, jeweils bezogen auf die Gesamtmenge des erfindungsgemäß einzusetzenden Korrosionsschutzgrundierungsmittels, eingesetzt.

Das erfindungsgemäß einzusetzende Korrosionsschutzgrundierungsmittel enthält in der Regel zudem mindestens ein organisches Lösemittel und/oder Wasser. Es werden organische Lösemittel eingesetzt, die die Vernetzung der erfindungsgemäßen Korrosionsschutzgrundierungsmittel nicht inhibieren und/oder mit den sonstigen Bestandteilen der erfindungsgemäßen Korrosionsschutzgrundierungsmittel chemische Reaktionen eingehen. Der Fachmann kann daher geeignete Lösemittel leicht anhand ihres bekannten Lösevermögens und ihrer Reaktivität auswählen. Beispiele für solche Lösemittel sind aliphatische und/oder aromatische Kohlenwasserstoffe wie Toluol, Xylol, Solventnaphtha, Solvesso 100, oder Hydrosol® (Fa. ARAL), Ketone, wie Aceton, Methylethylketon oder Methylamylketon, Ester, wie Ethylacetat, Butylacetat, Butylglycolacetat, Pentylacetat oder Ethylethoxypropionat, Ether, Alkohole, Chlorkohlenwasserstoffe oder Mischungen aus den vorgenannten Lösemitteln. Darüber hinaus kann das erfindungsgemäß einzusetzende Korrosionsschutzgrundierungsmittel noch mindestens einen Zusatzstoff enthalten. Beispiele für derartige Zusatzstoffe sind rückstandsfrei oder im Wesentlichen rückstandsfrei thermisch zersetzbare Salze, Reaktiwerdünner, Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Verdickungsmittel, Sag-Control-Agents (SCAs), Flammschutzmittel, Korrosionsinhibitoren, Wachse, Biozide und Mattierungsmittel. Sie werden in den üblichen und bekannten Mengen eingesetzt.

Der Festkörpergehalt des erfindungsgemäß einzusetzenden Korrosionsschutzgrundierungsmittels kann je nach den Erfordernissen des Einzelfalls variieren. In erster Linie richtet sich der Festkörpergehalt nach der für die Applikation erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörper des Korrosionsschutzgrundierungsmittels bei 20 bis 90 Gew.-%, besonders bevorzugt bei 30 bis 80 Gew.-% und insbesondere bevorzugt bei 40 bis 60 Gew.-%.

Die Herstellung des erfindungsgemäß einzusetzenden Korrosionsschutzgrundierungsmittels kann unter Einsatz der für die Herstellung von Beschichtungsmitteln üblichen und bekannten Mischverfahren und Mischaggregaten erfolgen.

Das erfindungsgemäß einzusetzende Korrosionsschutzgrundierungsmittel wird im Rahmen des erfindungsgemäßen Verfahrens direkt auf ein metallisches Substrat appliziert. Direkt applizieren bedeutet, dass vor der Applikation des Korrosionsschutzgrundierungsmittels kein anderes, zur Bildung einer organisch-polymeren Matrix befähigtes Beschichtungsmittel oder ein Konversionsbeschichtungsmittel appliziert wird. Das Korrosionsschutzgrundierungsmittel ist also das erste applizierte Beschichtungsmittel.

Die Applikation des erfindungsgemäß einzusetzenden Korrosionsschutzgrundierungsmittels auf ein metallisches Substrat kann in den im Rahmen der Fahrzeugindustrie und Luftfahrtindustrie üblichen Schichtdicken (Nassfilmschichtdicken) im Bereich von beispielsweise 5 bis 400 $\mu$m, bevorzugt 10 bis 200 $\mu$m, besonders bevorzugt 15 bis 100 $\mu$m, erfolgen. Dabei werden beispielsweise die bekannten Methoden wie Spritzen, Rakeln, Streichen, Giessen, Tauchen, Tränken, Träufeln oder Walzen angewendet. Vorzugsweise werden Spritz- oder Rakelmethoden angewandt.

Nach der Applikation des erfindungsgemäß einzusetzenden Korrosionsschutzgrundierungsmittels wird daraus ein Polymerfilm gebildet. Das aufgebrachte Korrosionsschutzgrundierungsmittel wird also nach bekannten Methoden gehärtet. Bevorzugt wird physikalisch oder thermisch gehärtet, da im Rahmen der vorliegenden Erfindung physikalisch und thermisch härtende Systeme bevorzugt sind. Ganz besonders bevorzugt ist die thermische Härtung fremdvernetzender 2K-Systeme.

Die physikalische Härtung erfolgt bei Temperaturen von bevorzugt 5 bis 160°C, insbesondere von 10 bis 100°C und ganz besonders bevorzugt von 20°C bis 60°C. Die benötigte Zeitdauer ist dabei stark abhängig von dem verwendeten Beschichtungssystem und der Aushärtungstemperatur. Von den physikalisch härtbaren Korrosionsschutzgrundierungsmittel sind diejenigen bevorzugt, die bei den angegebenen Temperaturen innerhalb von zwei Stunden eine klebfreie und damit überlackierbare Beschichtung ergeben.

Die thermische Härtung erfolgt bevorzugt bei Temperaturen von 10 bis 200°C, insbesondere 10 bis 100°C, ganz besonders bevorzugt von 10 bis 50°C. Diese bevorzugten, eher niedrigen Härtungstemperaturen ergeben sich aus dem Umstand, dass für die bevorzugten Zwei-Komponenten Systeme, insbesondere ein Epoxidharz/Polyamin-System, bekanntermaßen nur niedrige Härtungstemperaturen notwendig sind. Die Zeitdauer der thermischen Härtung kann je nach Einzelfall stark variieren und liegt beispielsweise zwischen 5 min und 5 Tagen, insbesondere zwischen 1 Stunde und 2 Tagen.

Der Härtung kann je nach Einzelfall und eingesetzten Bindemittel/Vernetzungsmittel Systemen gegebenenfalls ein Ablüften bei beispielsweise Raumtemperatur (etwa 15 und 25°C) für beispielsweise 1 bis 60 min und/oder eine Trocknung bei beispielsweise leicht erhöhten Temperaturen von 30 bis 80°C für beispielsweise 1 bis 60 min vorausgehen. Unter Ablüften und Trocknung ist im Rahmen der vorliegenden Erfindung ein Abdunsten von organischen Lösemitteln und/oder Wasser zu verstehen, wodurch der Lack trocken, aber noch nicht gehärtet wird beziehungsweise noch kein vollständig vernetzter Lackfilm gebildet wird.

Durch die Härtung erhält man dann das erfindungsgemäße beschichtete Metallsubstrat, welches ebenfalls Gegenstand der vorliegenden Erfindung ist.

Nach der Härtung des Korrosionsschutzmittels können noch weitere übliche und bekannte Beschichtungsmittel,

die zur Bildung einer auf einer polymeren Matrix basierenden Beschichtungsschicht befähigt sind, nach üblichen und bekannten Methoden appliziert werden. Die zugehörigen Schichtdicken (Nassfilmschichtdicken) der jeweiligen Einzelschichten liegen in den gängigen Bereichen, beispielsweise zwischen 5 bis 400 $\mu$m, insbesondere zwischen 20 und 200 $\mu$m. Nach der Applikation folgt dann die Härtung der Beschichtungen nach den ebenfalls bekannten und üblichen Methoden. Die einzelnen Beschichtungen können auch so hergestellt werden, dass sie nacheinander ohne jeweilige vollständige Härtung der Einzelschichten aufgebracht werden und dann in einer abschließenden gemeinsamen Härtung gehärtet werden (nass-in-nass-Verfahren). Natürlich ist auch die jeweils einzelne vollständige Härtung der Schichten möglich.

Im Rahmen der Automobilindustrie kann es sich bei den weiteren Beschichtungsschichten bekanntermaßen um übliche Füller-, Basislack- und Klarlackschichten handeln. Im Rahmen der Luftfahrtindustrie kann es sich um die typischen einschichtigen Decklackierungen, beispielsweise auf Basis von (2K)-Polyurethansystemen, handeln.

Natürlich kann die Applikation der gegebenenfalls weiteren Beschichtungsmittel auch vor der vollständigen Härtung des Korrosionsschutzmittels erfolgen. Das heißt das Korrosionsschutzmittel wird zuvor lediglich abgelüftet und/oder getrocknet (nass-in-nass-Verfahren).

Als metallische Substrate kommen letztlich alle metallischen Substrate, die beispielsweise im Rahmen der Metallindustrie (beispielsweise Maschinenbau und Ausrüstung, Automobilindustrie (Fahrzeugbau), Luft- und Raumfahrtindustrie, Schiffbauindustrie, Elektroindustrie, Feinmechanikindustrie) eingesetzt werden, in Frage. Vorteilhaft werden Aluminium, Aluminiumlegierungen wie insbesondere Aluminiumkupferlegierungen, ganz besonders bevorzugt die AA2024-T3 Legierung, sowie unlegierter und legierter Stahl, eingesetzt.

Im Folgenden soll die Erfindung anhand von Beispielen erläutert werden.

**Beispiele**

A) Herstellung von LDH

Es wurden unterschiedliche LDH auf Basis von Zink/Aluminium nach der direkten Kopräzipitationsmethode hergestellt. Zum Erhalt der erfindungsgemäß einzusetzenden LDH wurden m-Anilinsulfonsäure und 3,4-Dihydroxybenzoesäure eingesetzt. Zum Vergleich wurde das bekannte, aus Ethylendiamintetraessigsäure (EDTA) erhältliche Ethylendiamintetraacetat eingesetzt (vgl. beispielsweise ECS Transactions, 24 (1) 67-76 (2010)). Die genaue Herstellung wird anhand des folgenden Protokolls für m-Anilinsulfonsäure (m-Anilinsulfonat) dargelegt.

Einer 0,21 molaren wässrigen alkalischen Lösung (pH = 9) von m-Anilinsulfonsäure (m-Anilinsulfonat) wird eine wässrige Mischung aus $ZnCl_2{\cdot}6H_2O$ (0,52 molar) und $AlCl_3{\cdot}6H_2O$ (0,26 molar) bei Raumtemperatur unter Stickstoffatmosphäre und ständigem Rühren über 3 Stunden mit konstanter Dosierrate zugegeben, wobei die zudosierte Menge Kationen so gewählt wird, dass ein Molverhältnis des Anilinsulfonats zum dreiwertigen Al-Kation von 2:1 resultiert. Dabei wird der pH-Wert durch Zugabe einer 3-molaren NaOH-Lösung konstant bei pH = 9 gehalten. Nach Zugabe der wässrigen Mischung der Metallsalze wird die resultierende Suspension bei Raumtemperatur 3 Stunden gerührt beziehungsweise gealtert. Der resultierende Niederschlag wird durch Zentrifugieren isoliert und 4 Mal mit entionisiertem Wasser gewaschen. Die resultierende Aufschlämmung des weißen Reaktionsprodukts wird für 24 h bei 30°C im Vakuum getrocknet und dann als weißes Pulver erhalten. Die LDH (theoretische Summenformel bei einem theoretischen Maximalwert des Ladungskompensationsgrads von 100 % durch das m-Anilinsulfonat: $Zn_2Al(OH)_6$(m-Anilinsulfonat)) weisen einen Ladungskompensationsgrad von 84 % auf (quantitativ elementanalytisch gemessen über ICP-OES).

Während die Synthese der LDH enthaltend 3,4-Dihydroxybenzoat analog der Synthese der m-Anilinsulfonat enthaltenden LDH durchgeführt wurde, wurde für die EDTA enthaltenden LDH ein pH-Wert von 10,5 zur Gewährleistung einer vollständigen Deprotonierung der organischen Spezies gewählt. Zudem ergab sich, dass ein Molverhältnis des Ethylendiamintetraacetats zum dreiwertigen Al-Kation von 5:1 die besten Resultate lieferte (die elementaranalytisch bestimmten Gehalte an C(8,4%), N(1,9%) und H(3,6%) entsprechen weitgehend den berechneten Werten von 8,2%, 1,9% und 3,5% der theoretischen Zusammensetzung $Zn_2Al(OH)_6[EDTA]_{0,25}{\cdot}2H_2O$).

B) Herstellung von Korrosionsschutzgrundierungsmitteln

Es wurden Korrosionsschutzgrundierungsmittel enthaltend LDH-(A) (m-Anilinsulfonat) und LDH-(B) (3,4-Dihydroxybenzoat) sowie LDH-(Vergleich) (EDTA) hergestellt. Der Anteil an LDH lag jeweils bei 10 Gew.-%, bezogen auf die Gesamtkomposition und wurde vor Komplettierung des Lacks in die Polymerkomponente (vgl. Tabelle 1) eingearbeitet. Ebenfalls hergestellt wurde ein Referenz-Beschichtungsmittel für die unter D) angeführte Bestimmung der Korrosionsbeständigkeit. In diesem Referenz-Beschichtungsmittel wurde auf den Einsatz von LDH verzichtet. Bei dem Korrosionsschutzgrundierungsmittel handelte es sich um ein Epoxidharz/Polyamin-basiertes (2K)-Beschichtungsmittel. Die Bestandteile und deren Mengen der Polymerkomponente und der Vernetzungskomponente des Korrosionsschutzgrundierungsmittels sind in den

Tabellen 1 und 2 angegeben. Die Komponenten wurden in einem Verhältnis von 3:1 (Polymerkomponente:Vernetzungskomponente) unmittelbar vor der Applikation auf ein Substrat gemischt.

Tabelle 1: Zusammensetzung Polymerkomponente

| **Bestandteil** | **Menge** |
|---|---|
| Epikote 834-x-80[1] | 52,2 |
| Beckopox EM 460/601BX[2] | 13,2 |
| Handelsübliches Netz- und Dispergieradditiv | 1,2 |
| Xylol | 7,8 |
| Methoxypropylacetat | 15,5 |
| Butylacetat | 10,0 |

[1] Handelsübliches Epoxidharz von Momentive, Epoxidgruppengehalt (bezogen auf festes Harz) = 4000 mmol/kg, Festkörper = 80 % in Xylene,
[2] Handelsübliches Epoxidharz von Cytec, Festkörper = 60 % in Xylene,

Tabelle 2: Zusammensetzung Vernetzungskomponente

| **Bestandteil** | **Menge** |
|---|---|
| Cardolite NC 562[1] | 49,6 |
| Merginamid L 190[2] | 9,2 |
| Ancamine K54[3] | 0,4 |
| Methoxypropanol | 12,7 |
| Isobutanol | 8,0 |
| Xylol | 15,7 |
| Diethylentriamin | 1,2 |
| Epikote 828[4] | 3,2 |

[1] Handelsübliches Epoxidharz-Vernetzungsmittel (Polyamin) von Cardolite, H-aktiv-Äquivalentmasse 174 g/mol, Festkörper 65 %,
[2] Handelsübliches Epoxidharz-Vernetzungsmittel (Polyamin beziehungsweise Polyaminoamid) H-aktiv-Äquivalentmasse 230 g/mol,
[3] Handelsübliche Bezeichnung für Tris(dimethylaminomethyl)phenol, gängiger Aktivator für Epoxidharz-Vernetzungsmittel (Polyamine),
[4] Handelsübliches Epoxidharz ohne Lösemittel von Momentive, Epoxidgruppengehalt 5300 mmol/kg

C) Herstellung von beschichteten Substraten

Es wurden Substratplatten aus der AA2024-T3-Legierung (Aluminiumkupferlegierung) mit den hergestellten Korrosionsschutzgrundierungsmitteln beschichtet.

Dazu wurden die Substratplatten zunächst mit Isopropanol gesäubert und bei 60°C im Trockenschrank getrocknet. Dann wurden die Platten durch Eintauchen für 3 Minuten in 4 molarer NaOH-Lösung geätzt und anschließend mit Wasser gewaschen. Es folgte ein für 2 Minuten andauerndes Eintauchen der Platten in einer Mischung von Wasser/Salpetersäure (70-%-ig) (2:1, (v/v)), ein nochmaliges Abspülen mit Wasser und ein abschließendes Trocknen der Platten bei 60°C im Trockenschrank.

Auf die so vorbereiteten Substratplatten wurden die Korrosionsschutzgrundierungsmittel enthaltend LDH-(A), LDH-(B), LDH-(Vergleich) sowie das Referenzbeschichtungsmittel jeweils mit einem 50 μm Spiralrakel aufgetragen und anschließend für 24 h bei 25°C gehärtet. Anschließend wurde ein herkömmlicher Zwei-Komponenten Polyurethan-Decklack mit einem 175 μm Spiralrakel aufgetragen und dann für 24 h bei 25°C gehärtet. Die so hergestellten beschichteten Metallsubstrate wurden für 7 Tage bei 25°C gelagert und anschließend wie unter D) beschrieben untersucht.

D) Prüfung der Korrosionsbeständigkeit der beschichteten Metallsubstrate

Die Prüfung der Korrosionsbeständigkeit beziehungsweise der Korrosionsinhibierungseffizienz der beschichteten metallischen Substrate erfolgte mittels Gleichstrompolarisationsmessungen (DC polarization). Bekanntermaßen liegt einem Korrosionsprozess eine elektrochemische Reaktion zwischen einem Material, in der Regel einer Metalloberfläche, und dessen Umgebung zugrunde, wobei das Metall oxidiert und entsprechend Metallkationen aus dem festen Material austreten, das heißt also ein Korrosionsstrom fließt. Bei der Gleichstrompolarisationsmessungen handelt sich um eine an sich bekannte elektrochemische Messmethode, die beispielsweise in "Progress in Organic Coatings, 61 (2008) 283-290" beschrieben ist. Dabei wird die Stromantwort eines Systems auf eine Potentialvariation bei konstanter Scanrate gemessen. Aus den resultierenden Messdaten lässt sich dann der Korrosionsstrom ableiten.

Die Korrosionsinhibierungseffizienz I.E. wird anhand der Formel

$$I.E.\ (\%) = ((i_0 - i_{LDH}) / (i_0)) \cdot 100\ \%$$

bestimmt, wobei es sich bei den Parametern um den Korrosionsstrom beziehungsweise die Korrosionsstromdichte (Einheit beispielsweise Ampere pro Quadratzentimeter) der Referenzprobe ($i_0$, Substrat beschichtet mit Referenz-Beschichtungsmittel (ohne LDH)) beziehungsweise der jeweiligen LDH-Probe ($i_{LDH}$, Substrat beschichtet mit den Korrosionsschutzgrundierungsmitteln enthaltend LDH-(A), LDH-(B) oder LDH-(Vergleich)) handelt. Der Parameter I.E. (%) ist demnach jeweils um die Korrosionsbeständigkeit des Referenzbeschichtungssystems korrigiert; angegeben wird die Verbesserung der Korrosionsbeständigkeit beziehungsweise der Korrosionsinhibierungseffizienz im Verhältnis zur Referenzprobe.

Je niedriger die Korrosionsstromdichte, desto besser ist das Substrat abgeschirmt beziehungsweise vor der Korrosion geschützt. Dies bedeutet, dass bei niedrigen Werten für $i_{LDH}$ und einer damit guten Korrosionsinhibierungseffizienz der Parameter I.E. einen hohen Wert annimmt. Für die Referenzprobe (bei der definitionsgemäß $i_0 = i_{LDH}$ gelten muss), nimmt der Parameter I.E. definitionsgemäß den Wert 0 % an.

Die Messungen wurden mit einem VSP Multichannel Potentiostat/Galvanostat von BioLogic unter Verwendung der entsprechenden, ebenfalls von BioLogic stammende Anwendersoftware EC-Lab V9.95 durchgeführt. Als Elektrolytlösung für die Messungen wurde eine 0,5 M NaCl-Lösung eingesetzt; alle Messungen wurden bei 25°C durchgeführt. Als Elektrode diente neben dem Metall des jeweiligen beschichteten metallischen Substrats eine Kalomelelektrode (als Gegenelektrode). Unmittelbar vor der Messung wurden die beschichteten metallischen Substrate mit einem Messer (1 mm Schnittbreite) eingeritzt. Dabei wurden zunächst zwei parallele Schnitte mit einer Länge von 2 cm gesetzt und dann nochmals zwei parallele Schnitte kreuzförmig zu den ersten beiden Schnitten gesetzt. Die dem Elektrolyt ausgesetzte Oberfläche beträgt somit etwa 1,6 +/- 0,2 $cm^2$).

Tabelle 3 zeigt die entsprechenden Messergebnisse als Mittelwerte für die untersuchten Systeme.

Tabelle 3:

| LDH-Anion des Korrosionsschutzgrundierungsmittels | I.E. (%) |
|---|---|
| (A) m-Anilinsulfonat | 32,7 |
| (B) 3,4-Dihydroxybenzoat | 31,5 |
| (Vergleich) EDTA | 10,0 |

Die Daten belegen, dass die Korrosionsinhibierungseffizienz der nach dem erfindungsgemäßen Verfahren hergestellten Korrosionsschutzbeschichtungen beziehungsweise der erfindungsgemäßen beschichteten metallischen Substrate im Vergleich zu nicht LDH-haltigen Beschichtungen (I.E. = 0) deutlich verbessert ist. Zudem wird eine Korrosionsinhibierungseffizienz erhalten, die im Vergleich zu einem Beschichtungssystem, welches die bekannten EDTA-LDH enthält, um etwa den Faktor 3 verbessert ist.

## Patentansprüche

**1.** Verfahren zur Herstellung einer Korrosionsschutzbeschichtung, bei dem

(1) ein Korrosionsschutzgrundierungsmittel enthaltend

(A) mindestens ein organisches Polymer als Bindemittel, wobei es sich nicht um ein anionisch stabilisiertes Polymer handelt und
(B) mindestens ein synthetisches, organische Anionen enthaltendes schichtförmiges Doppelhydroxid

direkt auf ein metallisches Substrat aufgebracht wird und
(2) aus dem in Stufe (1) aufgebrachten Korrosionsschutzgrundierungsmittel ein Polymerfilm gebildet wird,

wobei das Verfahren **dadurch gekennzeichnet ist, dass** das mindestens eine synthetische schichtförmige Doppelhydroxid (B) mindestens ein organisches Anion der folgenden Formel (I) umfasst:

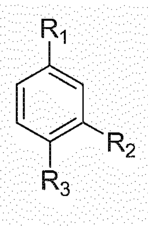

(I)

mit

$R_1 = COO^-, SO_3^-$,
$R_2/ R_3 = NH_2, OH, H$.

2. Verfahren nach Anspruch 1, **dadurch gekennzeichnet, dass** das Korrosionsschutzgrundierungsmittel mindestens ein Polyvinylbutyralharz und/oder Epoxidharz als organisches Polymer (A) enthält.

3. Verfahren nach Anspruch 2, **dadurch gekennzeichnet, dass** das Korrosionsschutzgrundierungsmittel mindestens ein Epoxidharz als organisches Polymer (A) und mindestens ein Polyamin als Vernetzungsmittel enthält.

4. Verfahren nach einem der Ansprüche 1 bis 3, **dadurch gekennzeichnet, dass** das Korrosionsschutzgrundierungsmittel ein Zweikomponentensystem ist.

5. Verfahren nach einem der Ansprüche 1 bis 4, **dadurch gekennzeichnet, dass** in der Formel (I) $R_2 = R_3 = H$ ausgeschlossen ist.

6. Verfahren nach einem der Ansprüche 1 bis 5, **dadurch gekennzeichnet, dass** das mindestens eine synthetische, organische Anionen enthaltende schichtförmige Doppelhydroxid (B) die allgemeine Formel (II)

$$[M^{2+}_{(1-x)} M^{3+}_x(OH)_2[A^{y-}_{(x/y)}]\cdot nH_2O \qquad (II)$$

aufweist, wobei $M^{2+}$ für zweiwertige metallische Kationen, $M^{3+}$ für dreiwertige metallische Kationen und $A^{y-}$ für Anionen der mittleren Valenz y steht, wobei die Anionen zumindest anteilig mindestens ein organisches Anion umfassen, das erhältlich ist aus einer Verbindung der Formel (I), x einen Wert von 0,05 bis 0,5 und n einen Wert zwischen 0 und 10 einnimmt.

7. Verfahren nach Anspruch 6, **dadurch gekennzeichnet, dass**
die zweiwertigen metallischen Kationen $M^{2+}$ ausgewählt werden aus der Gruppe bestehend aus $Zn^{2+}$, $Mg^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$ und Mischungen davon, bevorzugt $Zn^{2+}$, $Mg^{2+}$, $Ca^{2+}$ und Mischungen davon, ganz besonders bevorzugt $Zn^{2+}$ und/oder $Mg^{2+}$, insbesondere $Zn^{2+}$,
die dreiwertigen metallischen Kationen $M^{3+}$ ausgewählt werden aus der Gruppe bestehend aus $Al^{3+}$, $Bi^{3+}$, $Fe^{3+}$, $Cr^{3+}$, $Ga^{3+}$, $Ni^{3+}$, $Co^{3+}$, $Mn^{3+}$, $V^{3+}$, $Ce^{3+}$, $La^{3+}$ und Mischungen davon, bevorzugt $Al^{3+}$, $Bi^{3+}$ und/oder $Fe^{3+}$, insbesondere $Al^{3+}$,
x einen Wert von 0,05 bis 0,5, insbesondere 0,15 bis 0,4, ganz besonders bevorzugt von 0,25 bis 0,35 und
n einen Wert von 0 bis 10 einnimmt.

8. Verfahren nach einem der Ansprüche 1 bis 7, **dadurch gekennzeichnet, dass** die mindestens eine Verbindung

der Formel (I) ausgewählt wird aus der Gruppe bestehend aus den von der Formel (I) umfassten Anilinsulfonsäuren sowie 3,4-Dihydroxybenzoesäure.

**9.** Verfahren nach Anspruch 8, **dadurch gekennzeichnet, dass** als Verbindung der Formel (I) m-Anilinsulfonsäure ausgewählt wird.

**10.** Verfahren nach einem der Ansprüche 1 bis 9, **dadurch gekennzeichnet, dass** das mindestens eine synthetische, organische Anionen enthaltende schichtförmige Doppelhydroxid (B) durch direkte Kopräzipitation oder anionische Austauschreaktion hergestellt wird.

**11.** Verfahren nach einem der Ansprüche 1 bis 10, **dadurch gekennzeichnet, dass** der Anteil des mindestens einen synthetische, organische Anionen enthaltenden schichtförmigen Doppelhydroxids (B) 5 bis 15 Gew.-%, bezogen auf die Gesamtmenge des Korrosionsschutzgrundierungsmittels, beträgt.

**12.** Verfahren nach einem der Ansprüche 1 bis 11, **dadurch gekennzeichnet, dass** nach der Bildung des Polymerfilms (2)
(3) mindestens ein weiteres Beschichtungsmittel aufgebracht wird,
wodurch eine Mehrschichtbeschichtung hergestellt wird.

**13.** Verfahren nach einem der Ansprüche 1 bis 12, **dadurch gekennzeichnet, dass** das metallische Substrat ausgewählt wird aus der Gruppe bestehend aus Aluminium, Aluminiumlegierungen, insbesondere Aluminiumkupferlegierungen, unlegiertem und legiertem Stahl.

**14.** Beschichtetes metallisches Substrat, welches nach dem Verfahren gemäß einem der Ansprüche 1 bis 13 beschichtet wurde.

**15.** Verwendung eines Korrosionsschutzgrundierungsmittels enthaltend

(A) mindestens ein organisches Polymer als Bindemittel, wobei es sich nicht um ein anionisch stabilisiertes Polymer handelt und
(B) mindestens ein synthetisches, organische Anionen enthaltendes schichtförmiges Doppelhydroxid,

wobei das mindestens eine synthetische schichtförmige Doppelhydroxid (B) mindestens ein organisches Anion der folgenden Formel (I) umfasst:

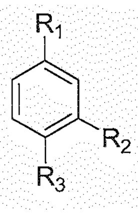

(I)

mit

$R_1$ = $COO^-$, $SO_3^-$,
$R_2$/ $R_3$ = $NH_2$, OH, H,

zur Verbesserung der Korrosionsbeständigkeit metallischer Substrate.

## Claims

**1.** Method for producing an anticorrosion coating, wherein

(1) an anticorrosion primer comprising

(A) at least one organic polymer as binder, which is not an anionically stabilized polymer, and

(B) at least one synthetic layered double hydroxide comprising organic anions
is applied directly to a metallic substrate and

(2) a polymer film is formed from the anticorrosion primer applied in stage (1),

the method being **characterized in that**
the at least one synthetic layered double hydroxide (B) comprises at least one organic anion of the following formula (I):

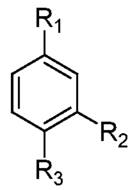

(I)

where

$R_1 = COO^-, SO_3^-$,
$R_2/R_3 = NH_2$, OH, H.

**2.** Method according to Claim 1, **characterized in that** the anticorrosion primer comprises at least one polyvinylbutyral resin and/or epoxy resin as organic polymer (A).

**3.** Method according to Claim 2, **characterized in that** the anticorrosion primer comprises at least one epoxy resin as organic polymer (A) and at least one polyamine as crosslinking agent.

**4.** Method according to any of Claims 1 to 3, **characterized in that** the anticorrosion primer is a two-component system.

**5.** Method according to any of Claims 1 to 4, **characterized in that** in the formula (I) $R_2 = R_3 = H$ is excluded.

**6.** Method according to any of Claims 1 to 5, **characterized in that** the at least one synthetic layered double hydroxide (B) comprising organic anions has the general formula (II)

$$[M^{2+(1-x)} M^{3+}_x(OH)^2][A^{y-}_{(x/y)}]\cdot nH_2O \quad (II)$$

where $M^{2+}$ stands for divalent metallic cations, $M^{3+}$ stands for trivalent metallic cations and $A^{y-}$ stands for anions of average valence y, the anions at least proportionally comprising at least one organic anion which is obtainable from a compound of the formula (I), x adopts a value of 0.05 to 0.5 and n adopts a value between 0 and 10.

**7.** Method according to Claim 6, **characterized in that** the divalent metallic cations $M^{2+}$ are selected from the group consisting of $Zn^{2+}$, $Mg^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$ and mixtures thereof, preferably $Zn^{2+}$, $Mg^{2+}$, $Ca^{2+}$ and mixtures thereof, very preferably $Zn^{2+}$ and/or $Mg^{2+}$, more particulcarly $Zn^{2+}$,
the trivalent metallic cations $M^{3+}$ are selected from the group consisting of $Al^{3+}$, $Bi^{3+}$, $Fe^{3+}$, $Cr^{3+}$, $Ga^{3+}$, $Ni^{3+}$, $Co^{3+}$, $Mn^{3+}$, $V^{3+}$, $Ce^{3+}$, $La^{3+}$ and mixtures thereof, preferably $Al^{3+}$, $Bi^{3+}$ and/or $Fe^{3+}$, more particularly $Al^{3+}$,
x adopts a value of 0.05 to 0.5, more particularly 0.15 to 0.4, very preferably of 0.25 to 0.35, and
n adopts a value of 0 to 10.

**8.** Method according to any of Claims 1 to 7, **characterized in that** the at least one compound of the formula (I) is selected from the group consisting of 3,4-dihydroxybenzoic acid and also anilinesulfonic acids encompassed by the formula (I).

**9.** Method according to Claim 8, **characterized in that** m-anilinesulfonic acid is selected as compound of the formula (I).

**10.** Method according to any of Claims 1 to 9, **characterized in that** the at least one synthetic layered double hydroxide (B) comprising organic anions is prepared by direct coprecipitation or anionic exchange reaction.

**11.** Method according to any of Claims 1 to 10, **characterized in that** the fraction of the at least one synthetic layered double hydroxide (B) comprising organic anions is 5% to 15% by weight, based on the total amount of the anticorrosion primer.

**12.** Method according to any of Claims 1 to 11, **characterized in that** after the formation of the polymer film (2)
(3) at least one further coating material is applied,
to produce a multicoat coating.

**13.** Method according to any of Claims 1 to 12, **characterized in that** the metallic substrate is selected from the group consisting of aluminium, aluminium alloys, more particularly aluminium-copper alloys, and unalloyed and alloyed steel.

**14.** Coated metallic substrate coated by the method according to any of Claims 1 to 13.

**15.** Use of an anticorrosion primer comprising

(A) at least one organic polymer as binder, which is not an anionically stabilized polymer, and
(B) at least one synthetic layered double hydroxide comprising organic anions,

the at least one synthetic layered double hydroxide (B) comprising at least one organic anion of the following formula (I):

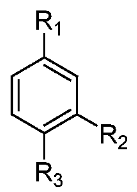

(I)

where

$R_1$ = $COO^-$, $SO_3^-$,
$R_2$/ $R_3$ = $NH_2$, OH, H,

for improving the corrosion resistance of metallic substrates.

**Revendications**

**1.** Procédé pour la préparation d'un revêtement anticorrosion, dans lequel

(1) un apprêt anticorrosion contenant

(A) au moins un polymère organique en tant que liant, qui n'est pas un polymère stabilisé de manière anionique et
(B) au moins un hydroxyde double synthétique, contenant des anions organiques, sous forme de couches

est appliqué directement sur un substrat métallique et
(2) un film de polymère est formé à partir de l'apprêt anticorrosion appliqué dans l'étape (1),

le procédé étant **caractérisé en ce que**
l'au moins un hydroxyde double synthétique (B) sous forme de couches comprend au moins un anion organique de formule (I) suivante :

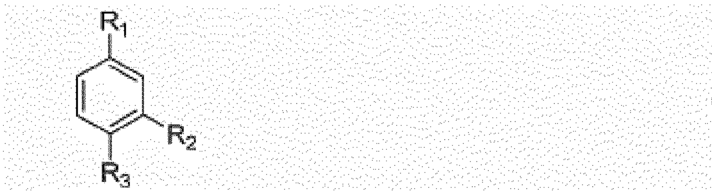

(I)

avec

$R_1$ = $COO^-$, $SO_3^-$,
$R_2/R_3$ = $NH_2$, OH, H.

2. Procédé selon la revendication 1, **caractérisé en ce que** l'apprêt anticorrosion contient au moins une résine de polyvinylbutyral et/ou une résine époxy en tant que polymère organique (A).

3. Procédé selon la revendication 2, **caractérisé en ce que** l'apprêt anticorrosion contient au moins une résine époxy en tant que polymère organique (A) et au moins une polyamine en tant qu'agent de réticulation.

4. Procédé selon l'une quelconque des revendications 1 à 3, **caractérisé en ce que** l'apprêt anticorrosion est un système à deux composants.

5. Procédé selon l'une quelconque des revendications 1 à 4, **caractérisé en ce que** dans la formule (I), $R_2 = R_3 = H$ est exclu.

6. Procédé selon l'une quelconque des revendications 1 à 5, **caractérisé en ce que** l'au moins un hydroxyde double (B) synthétique, contenant des anions organiques, sous forme de couches présente la formule générale (II)

$$[M^{2+}_{(1-x)}M^{3+}_{x}(OH)_2][A^{y-}_{(x/y)}]\cdot nH_2O \qquad (II),$$

$M^{2+}$ représentant des cations métalliques divalents, $M^{3+}$ représentant des cations métalliques trivalents et $A^{y-}$ représentant des anions de valence moyenne y, les anions comprenant au moins partiellement au moins un anion organique, qui peut être obtenu à partir d'un composé de formule (I), x prenant une valeur de 0,05 à 0,5 et n prenant une valeur comprise entre 0 et 10.

7. Procédé selon la revendication 6, **caractérisé en ce que**
les cations métalliques divalents $M^{2+}$ sont choisis dans le groupe constitué par $Zn^{2+}$, $Mg^{2+}$, $Ca^{2+}$, $Cu^{2+}$, $Ni^{2+}$, $Co^{2+}$, $Fe^{2+}$, $Mn^{2+}$, $Cd^{2+}$, $Pb^{2+}$, $Sr^{2+}$ et des mélanges correspondants, préférablement $Zn^{2+}$, $Mg^{2+}$, $Ca^{2+}$ et des mélanges correspondants, tout particulièrement préférablement $Zn^{2+}$ et/ou $Mg^{2+}$, en particulier $Zn^{2+}$, les cations métalliques trivalents $M^{3+}$ sont choisis dans le groupe constitué par $Al^{3+}$, $Bi^{3+}$, $Fe^{3+}$, $Cr^{3+}$, $Ga^{3+}$, $Ni^{3+}$, $Co^{3+}$, $Mn^{3+}$, $V^{3+}$, $Ce^{3+}$, $La^{3+}$ et des mélanges correspondants, préférablement $Al^{3+}$, $Bi^{3+}$ et/ou $Fe^{3+}$, en particulier $Al^{3+}$,
x prend une valeur de 0,05 à 0,5, en particulier 0,15 à 0,4, tout particulièrement préférablement de 0,25 à 0,35 et
n prend une valeur de 0 à 10.

8. Procédé selon l'une quelconque des revendications 1 à 7, **caractérisé en ce que** l'au moins un composé de formule (I) est choisi dans le groupe constitué par les acides anilinosulfoniques compris dans la formule (I) ainsi que l'acide 3,4-dihydroxybenzoïque.

9. Procédé selon la revendication 8, **caractérisé en ce qu'**en tant que composé de formule (I), l'acide m-anilinosulfonique est choisi.

10. Procédé selon l'une quelconque des revendications 1 à 9, **caractérisé en ce que** l'au moins un hydroxyde double synthétique (B), contenant des anions organiques, sous forme de couches est préparé par co-précipitation directe ou par réaction d'échange anionique.

11. Procédé selon l'une quelconque des revendications 1 à 10, **caractérisé en ce que** la proportion de l'au moins un hydroxyde double synthétique (B), contenant des anions organiques, sous forme de couches est de 5 à 15 % en poids, par rapport à la quantité totale de l'apprêt anticorrosion.

**12.** Procédé selon l'une quelconque des revendications 1 à 11, **caractérisé en ce qu'**après la formation du film de polymère (2),
(3) au moins un agent de revêtement supplémentaire est appliqué,
un revêtement multicouche étant ainsi préparé.

**13.** Procédé selon l'une quelconque des revendications 1 à 12, **caractérisé en ce que** le substrat métallique est choisi dans le groupe constitué par l'aluminium, les alliages d'aluminium, en particulier les alliages aluminium-cuivre, l'acier non allié et allié.

**14.** Substrat métallique revêtu, qui a été revêtu par le procédé selon l'une quelconque des revendications 1 à 13.

**15.** Utilisation d'un apprêt anticorrosion contenant

(A) au moins un polymère organique en tant que liant, qui n'est pas un polymère stabilisé de manière anionique et
(B) au moins un hydroxyde double synthétique, contenant des anions organiques, sous forme de couches,

l'au moins un hydroxyde double synthétique (B) sous forme de couches comprend au moins un anion organique de formule (I) suivante :

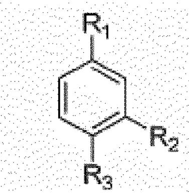

(I)

avec

$R_1$ = $COO^-$, $SO_3^-$,
$R_2$/$R_3$ = $NH_2$, OH, H,

pour l'amélioration de la résistance à la corrosion de substrats métalliques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03102085 A
- EP 0282619 A1
- WO 2005003408 A2
- CN 102140642 A
- WO 2009062621 A1
- DE 102007054241 A1
- DE 102007054249 A1
- DE 19930665 A1


### In der Beschreibung aufgeführte Nicht-Patentliteratur


- *ECS Transactions,* 2010, vol. 24 (1), 67-76
- **E. KANEZAKI.** Preparation of Layered Double Hydroxides in Interface Science and Technology. Elsevier, 2004, vol. 1, 345 ff
- **D.G. EVANS.** Preparation of Layered Double Hydroxides. *Struct Bond,* 2006, vol. 119, 89-119
- *Progress in Organic Coatings,* 2008, vol. 61, 283-290